(19) Europäisches Patentamt
European Patent Office
Office européen des brevets

(11) **EP 4 576 925 A1**

(12) **EUROPEAN PATENT APPLICATION**
published in accordance with Art. 153(4) EPC

(43) Date of publication:
**25.06.2025 Bulletin 2025/26**

(21) Application number: **23860116.5**

(22) Date of filing: **21.08.2023**

(51) International Patent Classification (IPC):
*H04W 76/19* (2018.01)     *G07B 15/00* (2011.01)
*H04W 4/00* (2018.01)      *H04W 4/44* (2018.01)
*H04W 76/30* (2018.01)     *H04W 84/10* (2009.01)

(52) Cooperative Patent Classification (CPC):
**G07B 15/00; H04W 4/00; H04W 4/44; H04W 76/19;
H04W 76/30; H04W 84/10**

(86) International application number:
**PCT/JP2023/030035**

(87) International publication number:
**WO 2024/048353 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 JP 2022138553**

(71) Applicant: **Sony Group Corporation
Tokyo 108-0075 (JP)**

(72) Inventors:
• **SUZUKI, Takashi
Tokyo 108-0075 (JP)**
• **WADA, Koichiro
Tokyo 108-0075 (JP)**
• **ITO, Daisuke
Tokyo 108-0075 (JP)**

(74) Representative: **D Young & Co LLP
3 Noble Street
London EC2V 7BQ (GB)**

(54) **COMMUNICATION SYSTEM, FIXED TERMINAL, AND MOBILE TERMINAL**

(57)    A communication system according to an embodiment includes a fixed terminal and a mobile terminal. The fixed terminal includes: a first communication unit configured to perform wireless communication in a first communication method; and a first control unit configured to control communication performed by the first communication unit. The mobile terminal includes: a second communication unit configured to perform wireless communication in the first communication method; a second control unit configured to control communication performed by the second communication unit; and a storage unit. The first control unit transmits identification information unique to the mobile terminal connected using the first communication unit, to the mobile terminal, disconnects the connection with the mobile terminal after transmitting the identification information, designates the mobile terminal by using the identification information using the first communication unit, and reconnects to the mobile terminal. The second control unit stores the identification information acquired through the communication with the fixed terminal performed by the second communication unit. After the communication with the fixed terminal is disconnected, the second control unit reconnects with the fixed terminal by the second communication unit in response to reception of identification information matching the stored identification information.

EP 4 576 925 A1

# FIG.19

BLE Peripheral

20 — PARKING LOT PAYMENT TERMINAL

BLE Central

10 — MOBILE TERMINAL

S300
START SCANNING FIRST ADV_IND

S301
FIRST ADV_IND (UUID = UUID#1)

S303

CONNECT_IND
S302

GENERATE RANDOM NUMBER ID FOR MOBILE TERMINAL #1 = MID#1

MID#1 NOTIFICATION (e.g. 4-byte RANDOM NUMBER)
S304

S305
STORE MID#1 VALUE

S307a

UWB SETTING PARAMETER EXCHANGE (BLE COMMUNICATION)
S306

S307b

START UWB DEVICE

S308
START UWB RANGING

START UWB DEVICE

UWB RANGING

LL_TERMINATE_IND (BLE DISCONNECTION)
S310

S309

S311
START SCANNING OF SECOND ADV_IND

DETECT MOBILE TERMINAL #1 IN PARKING LOT FEE PAYMENT ZONE

S312
FIRST ADV_IND (UUID = UUID#1)

S314
SECOND ADV_IND (UUID = UUID#2)

S315

S313

CONNECT_IND
S316

UWB RANGING

PARKING LOT FEE PAYMENT COMMUNICATION (BLE COMMUNICATION)
S317

DISCONNECT BLE & UWB
S318

# Description

Field

The present disclosure relates to a communication system, a fixed terminal, and a mobile terminal.

Background

There is a known parking lot fee payment system that performs cashless payment of fee at the time of exiting a parking lot. In a conventional parking lot fee payment system, fee payment is typically performed using a device such as an NFC card that stores information necessary for payment like identification information in built-in memory and performs Near Field radio Communication (NFC), for example.

Citation List

Patent Literature

Patent Literature 1: JP 2022-79566 A

Summary

Technical Problem

In a parking lot fee payment system according to the known technology, an occupant such as a driver of an automobile vehicle needs to open a window of the automobile vehicle or get off the automobile vehicle to bring an NFC card or the like into contact with a payment terminal at the time of fee payment. This might cause, in the parking lot fee payment system according to the known technology, impaired convenience in a bad weather such as rain or extreme cold in an outdoor parking lot, for example.

An object of the present disclosure is to provide a communication system, a fixed terminal, and a mobile terminal capable of performing cashless payment while an occupant of a vehicle stays in a vehicle.

Solution to Problem

For solving the problem described above, a communication system according to one aspect of the present disclosure has a fixed terminal including a first communication unit configured to perform wireless communication in a first communication method, and a first control unit configured to control the communication performed by the first communication unit; and a mobile terminal including a second communication unit configured to perform wireless communication in the first communication method, a second control unit configured to control the communication performed by the second communication unit, and a storage unit, wherein the first control unit: generates identification information unique to the mobile terminal connected by the communication performed by the first communication unit and transmits the generated identification information to the mobile terminal; disconnects the connection with the mobile terminal after transmitting the identification information; and designates the mobile terminal by using the identification information in the communication performed by the first communication unit, and reconnects to the mobile terminal, and the second control unit: stores, in the storage unit, the identification information acquired through the communication with the fixed terminal performed by the second communication unit; and after the communication with the fixed terminal is disconnected by the fixed terminal, reconnects with the fixed terminal by the second communication unit in response to reception of identification information matching the identification information stored in the storage unit.

Brief Description of Drawings

FIG. 1 is a schematic diagram illustrating a configuration of an example of a communication system applicable to an embodiment of the present disclosure.
FIG. 2 is a sequence diagram illustrating an example of payment processing of a parking lot fee payment system using near-field radio communication according to an existing technology.
FIG. 3 is a schematic diagram for illustrating an example of a burden on a user in payment processing of a parking lot fee according to the existing technology.
FIG. 4 is a schematic diagram for illustrating difficulty in selecting and connecting a specific device from among an unspecified large number of devices in communication using BLE according to the existing technology.
FIG. 5 is a schematic diagram for illustrating communication processing according to the embodiment.
FIG. 6 is a schematic diagram for illustrating a distance measurement principle by UWB.
FIG. 7 is a block diagram illustrating a configuration of an example of a mobile terminal applicable to an embodiment.
FIG. 8 is a functional block diagram of an example illustrating functions of a mobile terminal according to the embodiment.
FIG. 9 is a block diagram illustrating a configuration of an example of a parking lot payment terminal applicable to the embodiment.
FIG. 10 is a functional block diagram of an example illustrating functions of a parking lot payment terminal according to the embodiment.
FIG. 11 is a sequence diagram illustrating an example of typical connection processing using a combination of UWB and BLE.

FIG. 12 is a schematic diagram illustrating an example of a positional relationship between a mobile terminal and a parking lot payment terminal in each stage of typical connection processing using a combination of UWB and BLE.

FIG. 13 is a schematic diagram for illustrating a parking lot fee payment zone.

FIG. 14 is a sequence diagram illustrating an example of processing in which the parking lot payment terminal performs UWB ranging for a large number of mobile terminals.

FIG. 15 is a schematic diagram illustrating a packet configuration of a link layer in BLE.

FIG. 16 is a schematic diagram illustrating a frequency band allocated to UWB communication.

FIG. 17A is a schematic diagram for illustrating connection of a UWB device in a case where a passage for ordinary pedestrians exists in proximity to a parking lot payment terminal.

FIG. 17B is a schematic diagram for illustrating connection of a UWB device in a case where a passage for ordinary pedestrians exists in proximity to a parking lot payment terminal.

FIG. 18A is a schematic diagram for illustrating that communication of a vehicle with a parking lot payment terminal is delayed due to the presence of a large number of mobile terminals outside the vehicle.

FIG. 18B is a schematic diagram for illustrating that communication of a vehicle with a parking lot payment terminal is delayed due to the presence of a large number of mobile terminals outside the vehicle.

FIG. 19 is a sequence diagram illustrating an example of BLE reconnection processing in a case where there is one connection target according to the embodiment.

FIG. 20 is a sequence diagram illustrating an example of BLE reconnection processing in the presence of a plurality of connection targets according to the embodiment.

FIG. 21 is a schematic diagram illustrating an example of a configuration of a second UUID value according to the embodiment.

FIG. 22 is a schematic diagram illustrating an example of a dialogue screen for connection permission confirmation applicable to the embodiment.

FIG. 23 is a schematic diagram illustrating a configuration of an example of packet ADV_NONCONN_IND applicable to the embodiment.

FIG. 24 is a flowchart illustrating an example of processing for determining whether a mobile terminal is located in a vehicle according to the embodiment.

FIG. 25 is a schematic diagram illustrating a configuration of an example of packet ADV_NONCONN_IND applicable to the embodiment.

FIG. 26 is a flowchart of an example illustrating control of the mobile terminal based on an in-vehicle state according to the embodiment.

FIG. 27A is a schematic diagram for illustrating that the number of UWB devices to be subjected to UWB ranging is limited by the processing according to the embodiment.

FIG. 27B is a schematic diagram for illustrating that the number of UWB devices to be subjected to UWB ranging is limited by the processing according to the embodiment.

FIG. 28 is a schematic diagram for illustrating an architecture of a mobile terminal according to the embodiment.

Description of Embodiments

Embodiments of the present disclosure will be described below in detail with reference to the drawings. In each of the following embodiments, the same parts are denoted by the same reference symbols, and a repetitive description thereof will be omitted.

Hereinafter, embodiments of the present disclosure will be described in the following order.

1. Outline of embodiment according to present disclosure
2. Existing technology
3. Embodiment according to present disclosure

    3-1. Configuration applicable to embodiment
    3-2. Specific description of embodiment

        3-2-1. Processing up to UWB ranging

            3-2-1-1. Example in a case where there is one target
            3-2-1-2. Example of a case in presence of plurality of targets

        3-2-2. Problem when combining UWB and BLE

            3-2-2-1. Designation of connection destination of BLE reconnection
            3-2-2-2. Limiting of the number of UWB devices subject to UWB ranging

        3-2-3. BLE reconnection processing

            3-2-3-1. Example in a case where there is one target
            3-2-3-2. Example of a case in presence of plurality of targets

        3-2-4. Terminal determination in vehicle

    3-3. Architecture applicable to embodiment

4. Other embodiments

(1. Outline of embodiment according to present disclosure)

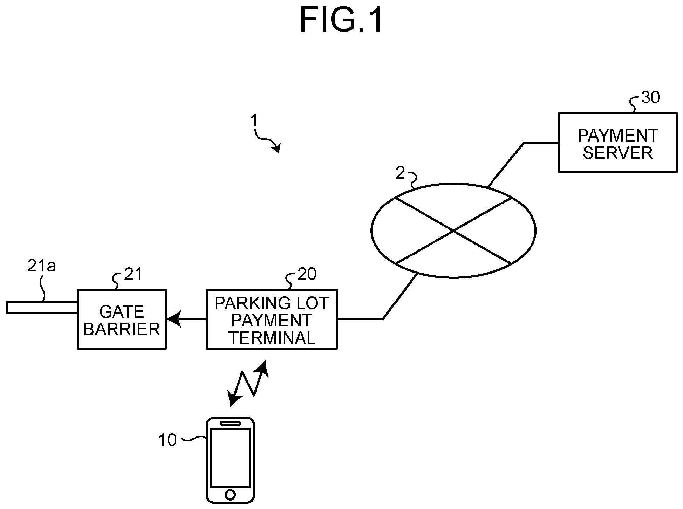

First, an outline of an embodiment according to the present disclosure will be described. FIG. 1 is a schematic diagram illustrating a configuration of an example of a communication system applicable to an embodiment of the present disclosure. Hereinafter, an example in which the communication system according to the present disclosure is applied to a parking lot fee payment system that performs communication for parking lot fee payment will be described.

In FIG. 1, a parking lot fee payment system 1 includes a mobile terminal 10, a parking lot payment terminal 20 as a fixed terminal, and a payment server 30. The parking lot payment terminal 20 is communicably connected to the payment server 30 via a network 2 such as the Internet. The mobile terminal 10 is, for example, a terminal apparatus carried by an occupant of a vehicle using a parking lot. Applicable examples of the mobile terminal 10 include an information processing device such as a smartphone or a tablet terminal which is portable and capable of performing wireless communication of a predetermined method.

The parking lot payment terminal 20 sends an instruction to a gate barrier 21 according to a payment operation by a user (for example, an occupant of a vehicle using the parking lot), and controls opening/closing of a gate bar 21a. The user may directly operate an operating tool provided in the parking lot payment terminal 20 to perform the payment operation, or may hold an NFC card having a near field radio communication (NFC) function over an NFC reader provided in the parking lot payment terminal 20 to perform the payment operation.

In the embodiment of the present disclosure, the payment operation for the parking lot payment terminal 20 is performed using the mobile terminal 10. That is, the parking lot fee payment system 1 according to the embodiment implements the payment operation using the mobile terminal 10 by wireless communication between the mobile terminal 10 located in the vehicle using the parking lot and the parking lot payment terminal 20.

More specifically, the parking lot payment terminal 20 communicates with the mobile terminal 10 by the first communication method using wireless communication, generates unique identification information, transmits the unique identification information to the mobile terminal 10, and temporarily disconnects the communication. When having detected, after disconnecting the communication with the mobile terminal 10, that the mobile terminal 10 has entered a predetermined parking lot fee payment zone defined in the parking lot payment terminal 20, the parking lot payment terminal 20 reconnects the communication according to the first communication method with the mobile terminal 10, exchanges information necessary for payment with the mobile terminal 10, and performs a payment operation.

When the payment operation using the mobile terminal 10 is successful, the parking lot payment terminal 20 opens the gate bar 21a and permits the vehicle including the mobile terminal 10 to exit from the parking lot or enter the parking lot.

In this manner, in the embodiment according to the present disclosure, the user can perform the payment of the parking lot fee while staying in the vehicle without holding the NFC card over the NFC reader of the parking lot payment terminal 20 or operating, outside the vehicle, the operating tool on the parking lot payment terminal 20, for example.

The first communication method described above can be implemented by applying Bluetooth Low Energy (BLE), which is one of extended specifications of Bluetooth (registered trademark) being a near-field radio communication technology and enables communication with extremely low power. In addition, the detection of entry of the mobile terminal 10 into the parking fee payment zone may use distance measurement by communication using an Ultra-Wide Band wireless system (hereinafter, referred to as UWB). A distance measurement method using UWB will be described later.

(2. Existing technology)

Next, in order to facilitate understanding, an example of a parking lot fee payment operation according to an existing technology will be described.

Some of the parking lot fee payment terminals in the existing technology perform payment not only by cash but also by near-field radio communication using a mobile terminal or an NFC card owned by a user to perform parking lot fee payment. In the following description, unless otherwise specified, the user refers to an occupant of the vehicle, such as a driver or a passenger in the vehicle.

The NFC card has a card-shaped housing to accommodate a processor, memory, a transmission/reception circuit, and an antenna circuit, so as to perform communication using Near Field radio Communication (NFC). The user taps or holds the NFC card over the NFC reader to enable communication to be performed between the NFC card and the NFC reader.

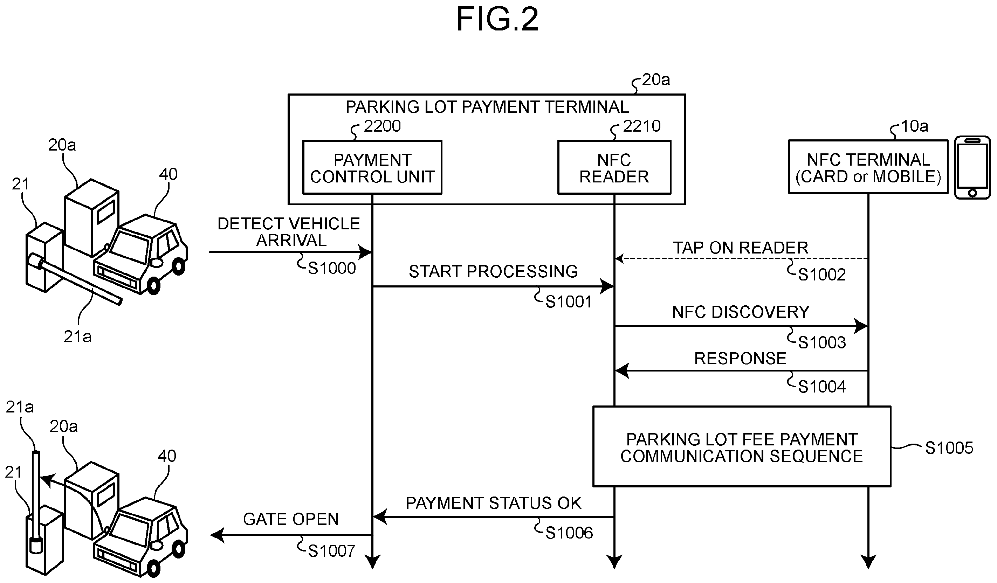

FIG. 2 is a sequence diagram illustrating an example of payment processing of a parking lot fee payment system using near-field radio communication according to the existing technology. The parking lot fee payment system illustrated in FIG. 2 includes an NFC terminal 10a and a parking lot payment terminal 20a. The NFC terminal 10a and the parking lot payment terminal 20a correspond to the parking lot payment terminal 20 and the mobile terminal 10 illustrated in FIG. 1, respectively.

The NFC terminal 10a, being a terminal capable of performing communication by NFC, corresponds to the above-described NFC card or a mobile terminal having or an emulation function of the NFC card. The parking lot payment terminal 20a includes a payment control unit 2200 and an NFC reader 2210. The NFC reader 2210 performs near-field radio communication with the NFC terminal 10a present within a certain distance. In accordance with communication with the NFC terminal 10a by the NFC reader 2210 or a direct operation (such as insertion of cash) by the user, the payment control unit 2200 performs, for example, communication with a payment server (not illustrated) and performs parking lot fee payment processing.

In FIG. 2, when a vehicle 40 arrives in front of the parking lot payment terminal 20a, the parking lot payment terminal 20a detects the arrival of the vehicle 40 in step S1000. At this point, the gate bar 21a is closed to prohibit passage of the vehicle 40 through the gate barrier 21. In response to the detection of the arrival of the vehicle 40, the parking lot payment terminal 20a starts payment processing (step S1001). On the other hand, the user in the vehicle 40 opens a window of the vehicle 40 on the NFC reader 2210 side, for example, to bring the NFC terminal 10a close to the NFC reader 2210 and tap the NFC terminal 10a onto the NFC reader 2210 (step S1002).

When the payment processing is started in step S1001, the NFC reader 2210 executes discovery for the tapped NFC terminal 10a (step S1003), and the NFC terminal 10a returns a response to the NFC reader 2210 in accordance with the discovery (step S1004). This establishes a communication connection between the NFC reader 2210 and the NFC terminal 10a, enabling execution of a parking lot fee payment communication sequence in step S1005.

When the payment processing communication in step S1005 is successful, the NFC reader 2210 passes a payment status (OK) indicating the success to the payment control unit 2200. The payment control unit 2200 issues a gate open instruction to the gate barrier 21 according to the payment status. The gate barrier 21 opens the gate bar 21a in response to this instruction. This makes it possible for the vehicle 40 to pass through the gate barrier 21.

The payment processing of the parking lot fee according to the above-described existing technology may impose a burden on the user. That is, in order to hold (or tap) the NFC terminal 10a over the parking lot payment terminal 20a (the NFC reader 2210), the use needs to open the window of the vehicle 40 or go out of the vehicle to perform an operation.

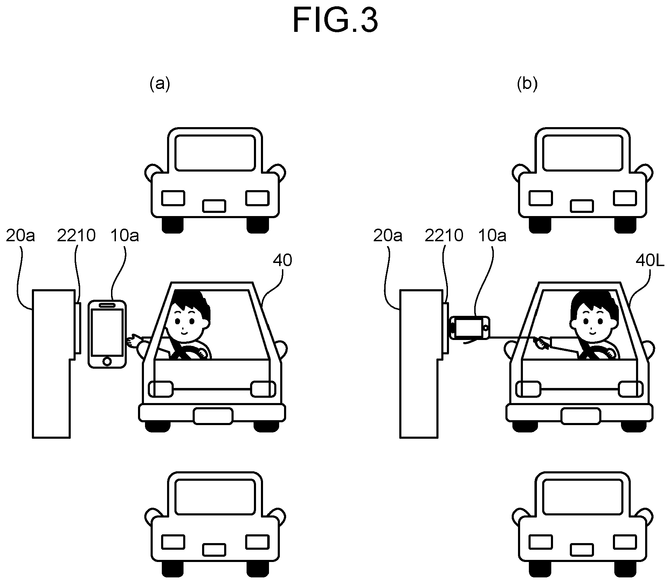

FIG. 3 is a schematic diagram for illustrating an example of a burden on a user in payment processing of a parking lot fee according to the existing technology. In a case where the parking lot payment terminal 20a is installed corresponding to a right-hand drive car and in a case where the vehicle 40 is a right-hand drive car, the user opens the window of the vehicle 40 and holds the NFC terminal 10a over the NFC reader 2210 as illustrated in section (a) of FIG. 3. Further, as illustrated in section (b) of FIG. 3, in the case of a vehicle 40L being a lefthand drive vehicle, it is difficult for the user in the driver's seat to hold the NFC terminal 10a over the NFC reader 2210. This is particularly noticeable in a case where the vehicle 40L is large in width or small in height.

In this manner, particularly in an outdoor parking lot, user experience (UX) in bad weather such as rainy weather or extremely cold weather is not at a satisfactory level. It is desirable that the payment processing of the parking lot fee can be performed without the user opening the window or going out of the vehicle.

As a means for eliminating such a situation that imposes a burden on the user, it is conceivable to perform payment processing using communication having a longer communication distance than NFC, such as BLE.

However, due to the nature of the communication protocol of BLE, it is difficult to select and connect a specific device from among an unspecified large number of devices, making it difficult to ensure connection with a mobile terminal in the vehicle 40 immediately in front of the parking lot payment terminal 20a. For example, in the presence of a plurality of devices capable of BLE communication around the parking lot payment terminal 20a, such as a following vehicle of the vehicle 40 immediately in front of the parking lot payment terminal 20a and other pedestrians around the parking lot payment terminal 20a, it is extremely difficult for the parking lot payment terminal 20a to specify the communication target.

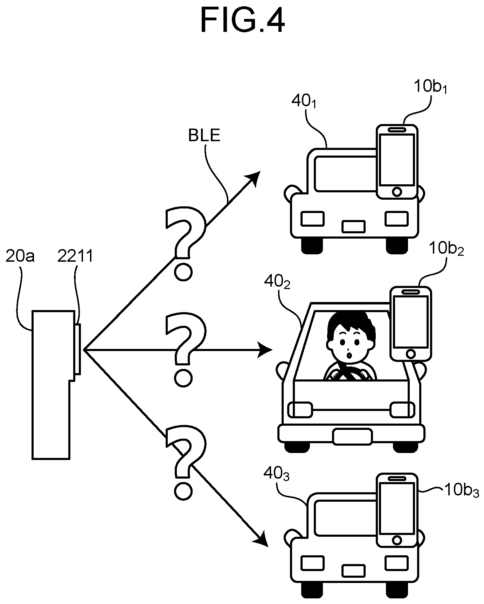

FIG. 4 is a schematic diagram for illustrating difficulty in selecting and connecting a specific device from among an unspecified large number of devices in communication using BLE according to the existing technology. As illustrated in FIG. 4, it is assumed that each user of a vehicle $40_2$ immediately in front of the parking lot payment terminal 20a, a vehicle $40_1$ being the following vehicle, and a vehicle $40_3$ in front of the vehicle $40_2$ possesses mobile terminals $10b_2$, $10b_1$, and $10b_3$ each capable of BLE communication. In such a case, it is difficult for a BLE communication unit 2211 included in the parking lot payment terminal 20a to designate and connect to a specific terminal from among the mobile terminals $10b_1$ to $10b_3$.

On the other hand, in order to solve the situation as illustrated in FIG. 4, it is conceivable to reduce the number of mobile terminals connected to the BLE communication unit 2211. As a means of reducing the number of connected mobile terminals, BLE connection is permitted on condition that a payment application for executing payment by BLE communication installed in the mobile terminal is started in advance. This would make it possible to reduce the number of devices capable of BLE communication around the parking lot payment terminal 20a and improve the probability of achieving pairing between the parking lot payment terminal and a correct mobile terminal. However, even with this method, it is difficult to exclude a case of having a plurality of target mobile terminals such as terminals in a following vehicle or in a vehicle on an opposite lane.

In addition, in terms of starting the payment application installed on the mobile terminal in advance, one aspect of UX convenience would be impaired as compared with the NFC card emulation function of the mobile terminal or the payment means using the NFC card.

Furthermore, there is a possibility that the BLE communication unit 2211 is erroneously connected to the vehicle $40_1$ behind or a mobile terminal located in a vehicle in the opposite lane, instead of the vehicle $40_2$ immediately in front of the parking lot payment terminal 20a. In this case, the vehicle $40_2$ cannot correctly enter the parking lot or exit from the parking lot.

(3. Embodiment according to present disclosure)

Next, an embodiment according to the present disclosure will be described. In the embodiment according to the present disclosure, the location of the mobile terminal 10 is specified by the parking lot payment terminal 20 using a communication means having a high-precision ranging (distance measurement) function such as UWB. Alternatively, the mobile terminal 10 specifies the location of the parking lot payment terminal 20 by the communication means. This makes it possible for the parking lot payment terminal 20 to limit the communication target to the mobile terminal 10 in the vehicle 40 located immediately in front of the parking lot payment terminal 20.

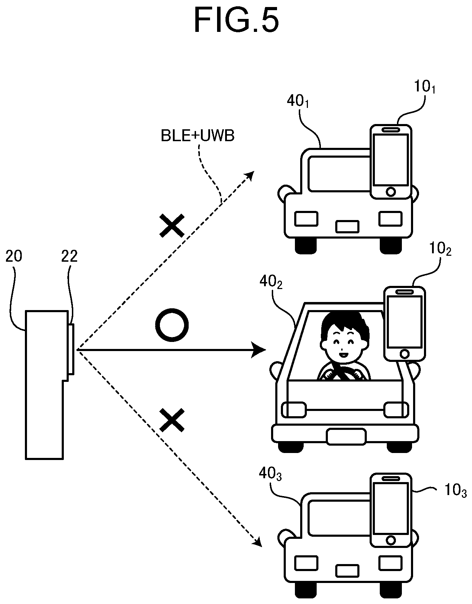

FIG. 5 is a schematic diagram for illustrating communication processing according to the embodiment. The parking lot payment terminal 20 includes a mobile communication unit 22, which is capable of performing communication using BLE as a first communication method and communication using UWB as a second communication method. Here, it is assumed that vehicles $40_1$, $40_2$, and $40_3$ respectively having mobile terminals $10_1$, $10_2$, and $10_3$ in each vehicle have arrived around the parking lot payment terminal 20. The mobile communication unit 22 is a piece of peripheral equipment in the BLE, and each of the mobile terminals $10_1$ to $10_3$ is a piece of central equipment.

The parking lot payment terminal 20 uses the mobile communication unit 22 to perform advertisement in BLE. After receiving this advertisement, the peripheral mobile terminals $10_1$ to $10_3$ returns a response to the received advertisement to the mobile communication unit 22. At this time, the scan of the advertisement by the mobile terminals $10_1$ to $10_3$ is executed at an arbitrary timing. Therefore, one of the mobile terminals $10_1$ to $10_3$ that has successfully received the advertisement at a good timing returns a response and is connected to the parking lot payment terminal 20.

The parking lot payment terminal 20 generates and transmits unique identification information to the connected mobile terminal. In addition, the parking lot payment terminal 20 exchanges parameters (referred to as UWB setting parameters) used for UWB communication with the mobile terminal connected at the same time. When the necessary BLE communication is completed, the BLE connection between the parking lot payment terminal 20 and the mobile terminal is disconnected at the moment. When the exchange of the UWB setting parameters is completed, the parking lot payment terminal 20 causes the mobile communication unit 22 to execute distance measurement (ranging) by UWB communication onto the mobile terminal with which the UWB setting parameters have been exchanged.

By sequentially performing the series of processing between the parking lot payment terminal 20 and the mobile terminals $10_1$ to $10_3$, distance measurement (ranging) using UWB communication is executed between the parking lot payment terminal 20 and the mobile terminal.

Based on a result of ranging, the parking lot payment terminal 20 specifies a terminal (the mobile terminal $10_2$ in the example of FIG. 5) at a position closest to the mobile communication unit 22 among the mobile terminals $10_1$ to $10_3$, as a payment processing target terminal. The parking lot payment terminal 20 performs BLE reconnection to the specified mobile terminal $10_2$ and executes communication for payment processing.

In this manner, the embodiment of the present disclosure executes the payment of the parking lot fee by using the communication means having the high-precision ranging function together with the communication means for transmitting and receiving payment information. This makes it possible to implement the parking lot fee payment system 1 capable of providing a convenient contactless UX that does not require opening of a window or holding operation of the mobile terminal 10 or the like at the time of payment of the parking lot fee.

(Distance measurement by UWB)

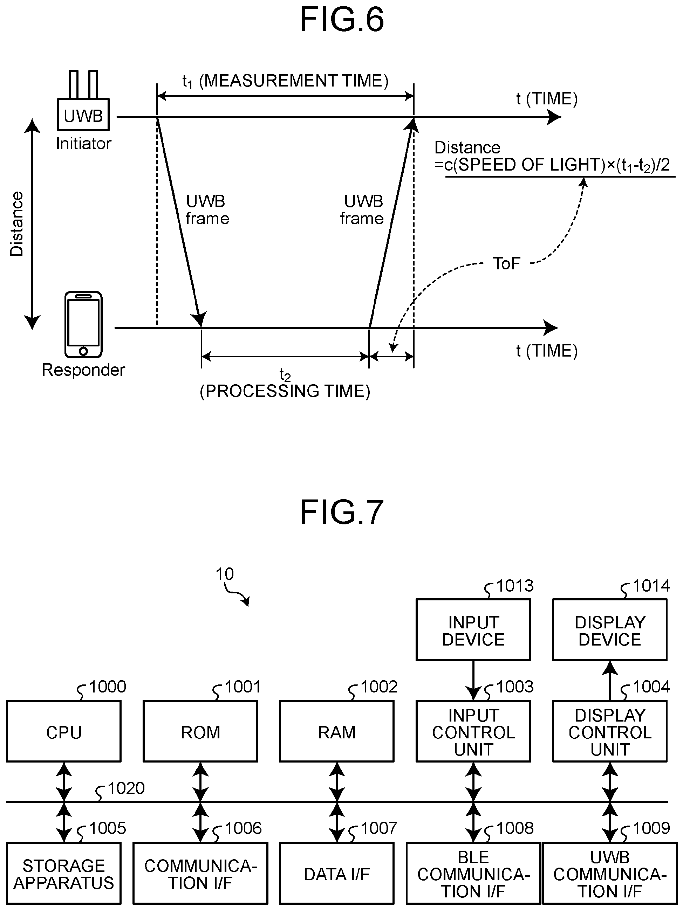

Here, the principle of distance measurement by UWB will be schematically described. FIG. 6 is a schematic diagram for illustrating a distance measurement principle by UWB. Here, a description will be given using, as an example, symmetric Single-Sided Two-Way Ranging which is the simplest ranging method using UWB. An initiator (corresponding to the mobile communication unit 22) transmits a UWB frame to a responder (corresponding to mobile terminals $10_1$, $10_2$, and $10_3$). After a lapse of a certain length of time $t_2$ corresponding to a processing time or the like after receiving the UWB frame, the responder transmits the UWB frame including the value of the time $t_2$ to the initiator.

The initiator measures the length of time $t_1$ from a time point of transmission of the UWB frame to the responder to a time point of reception of the UWB frame transmitted from the responder. The initiator calculates a distance between the initiator and the responder by the following Formula (1) using the lengths of time $t_1$ and $t_2$ and the speed of light c.

$$\text{Distance} = c \times (t_1 - t_2)/2 \quad (1)$$

In the distance measurement by UWB, it is possible to perform distance measurement with precision of about several centimeter (cm) to 20 cm by the distance measurement method as described above.

(3-1. Configuration applicable to embodiment)

Next, a configuration applicable to the embodiment will be described.

FIG. 7 is a block diagram illustrating a configuration of an example of the mobile terminal 10 applicable to the embodiment.

In FIG. 7, the mobile terminal 10 includes a central processing unit (CPU) 1000, Read Only Memory (ROM) 1001, Random Access Memory (RAM) 1002, an input control unit 1003, and a display control unit 1004. The mobile terminal 10 further includes a storage apparatus 1005, a communication I/F 1006, a data I/F 1007, a BLE communication I/F 1008, and a UWB communication I/F 1009. These units included in the mobile terminal 10 are communicably connected to each other by a bus 1020.

The storage apparatus 1005 is a nonvolatile storage medium such as flash memory. Not limited thereto, and the storage apparatus 1005 may be implemented by adopting a hard disk drive. The CPU 1000 operates using the RAM 1002 as work memory in accordance with the program stored in the storage apparatus 1005 or the ROM 1001 so as to control the entire operation of the mobile terminal 10.

A input device 1013 is a device for receiving a user operation, and outputs a signal corresponding to a position touched by the user, for example. The input control unit 1003 generates a control signal according to a user operation based on the signal output from the input device 1013, and passes the generated control signal to the CPU 1000 via the bus 1020. Based on the display control information generated by the CPU 1000, the display control unit 1004 generates a display signal that can be supported by a display device 1014, and passes the generated display signal to the display device 1014. The display device 1014 displays a screen corresponding to the display signal passed from the display control unit 1004.

Note that the input device 1013 and the display device 1014 may be integrally configured, as a touch panel, to output a signal corresponding to the user operation on an operation screen displayed on the display device 1014.

The communication interface (communication I/F) 1006 is an interface for performing communication via a communication network such as the Internet by wireless communication under the control of the CPU 1000. The data I/F 1007 is an interface for transmitting and receiving data to and from external equipment by wired communication, for example, under the control of the CPU 1000.

The BLE communication I/F 1008 is an interface for performing wireless communication according to the BLE protocol under the control of the CPU 1000. The UWB communication I/F 1009 is an interface for performing wireless communication according to the UWB protocol under the control of the CPU 1000. The UWB communication I/F 1009 may perform processing related to distance measurement by UWB communication.

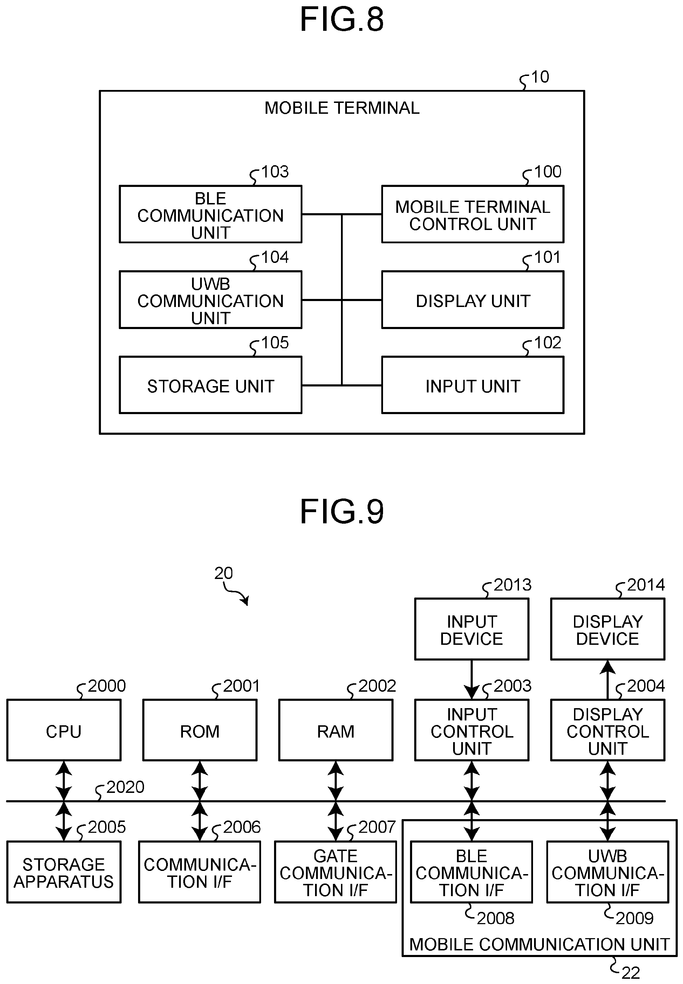

FIG. 8 is a functional block diagram of an example illustrating functions of the mobile terminal 10 according to the embodiment.

In FIG. 8, the mobile terminal 10 includes a mobile terminal control unit 100, a display unit 101, an input unit 102, a BLE communication unit 103, a UWB communication unit 104, and a storage unit 105.

These units, namely, the mobile terminal control unit 100, the display unit 101, the input unit 102, the BLE communication unit 103, the UWB communication unit 104, and the storage unit 105, are constituted by operation of the payment program according to the embodiment on the CPU 1000. Not limited to this, some or all of the mobile terminal control unit 100, the display unit 101, the input unit 102, the BLE communication unit 103, the UWB communication unit 104, and the storage unit 105 may be constituted by hardware circuits that operate in cooperation with each other. The payment program may be referred to as a payment application program or a payment application.

The mobile terminal control unit 100 controls the entire operation of the mobile terminal 10. The display unit 101 generates display control information and controls display of a screen on the display device 1014, for example. The input unit 102 receives a user operation on the input device 1013 and generates control information according to the user operation.

The BLE communication unit 103 controls the BLE communication I/F 1008 to execute communication as a central device of the BLE. The UWB communication unit 104 controls the UWB communication I/F 1009 to perform communication as a responder of UWB and perform distance measurement.

The storage unit 105 controls reading and writing of data from and to the storage apparatus 1005 and the RAM 1002. Not limited thereto, and the storage unit 105 may control, for example, reading and writing of data from and to a register included in the CPU 1000. Hereinafter, in order to avoid complexity, reading and writing of data by the storage unit 105 from and to the storage apparatus 1005 and the RAM 1002 will be described as reading and writing of data by the storage unit 105 or the like.

In the mobile terminal 10, when the payment application according to the embodiment is executed, the CPU 1000 constitutes each of the mobile terminal control unit 100, the display unit 101, the input unit 102, the BLE communication unit 103, the UWB communication unit 104, and the storage unit 105 described above as a module in a main storage area on the RAM 1002, for example.

The payment application is to be acquirable from the outside via a network such as the Internet by communication via the communication I/F 1006 and installable on the mobile terminal 10. The present invention is not limited thereto, and the payment application may be provided from the outside via the data I/F 1007. Furthermore, the payment application may be provided by being stored in a detachable storage medium such as a compact disk (CD), a digital versatile disk (DVD), or a universal serial bus (USB) flash drive.

FIG. 9 is a block diagram illustrating a configuration of an example of the parking lot payment terminal 20 applicable to the embodiment.

In FIG. 9, the parking lot payment terminal 20 includes a CPU 2000, ROM 2001, RAM 2002, an input control unit 2003, and a display control unit 2004. The parking lot payment terminal 20 further includes a storage apparatus 2005, a communication I/F 2006, a gate communication I/F 2007, a BLE communication I/F 2008, and a UWB communication I/F 2009. These units included in the parking lot payment terminal 20 are communicably connected to each other by a bus 2020.

The storage apparatus 2005 is a nonvolatile storage medium such as flash memory or a hard disk drive. The CPU 2000 operates using the RAM 2002 as work memory in accordance with the program stored in the storage apparatus 2005 or the ROM 2001 so as to control the entire operation of the parking lot payment terminal 20.

A input device 2013 is a device for receiving a user operation, includes an operating tool such as a button or a touch pad, and outputs a signal corresponding to the user operation. The input control unit 2003 generates a control signal according to a user operation based on the signal output from the input device 2013, and passes the generated control signal to the CPU 2000 via the bus 2020. Based on the display control information generated by the CPU 2000, the display control unit 2004 generates a display signal that can be supported by a display device 2014, and passes the generated display signal to the display device 2014. The display device 1014 displays a screen and a symbol corresponding to the display signal passed from the display control unit 2004.

Note that the input device 2013 and the display device 2014 may be integrally configured, as a touch panel, to output a signal corresponding to a user operation on an operation screen displayed on the display device 2014.

The communication I/F 2006 is an interface for performing communication via a communication network such as the Internet by wireless communication under the control of the CPU 2000. The gate communication I/F 2007 is an interface for communicating with the gate barrier 21 under the control of the CPU 2000.

The BLE communication I/F 2008 is an interface for performing wireless communication according to the BLE protocol under the control of the CPU 2000. The UWB communication I/F 2009 is an interface for performing wireless communication according to the UWB protocol under the control of the CPU 2000. The UWB communication I/F 2009 may perform processing related to distance measurement by UWB communication.

Note that the BLE communication I/F 2008 and the UWB communication I/F 2009 constitute the mobile communication unit 22 illustrated in FIG. 5.

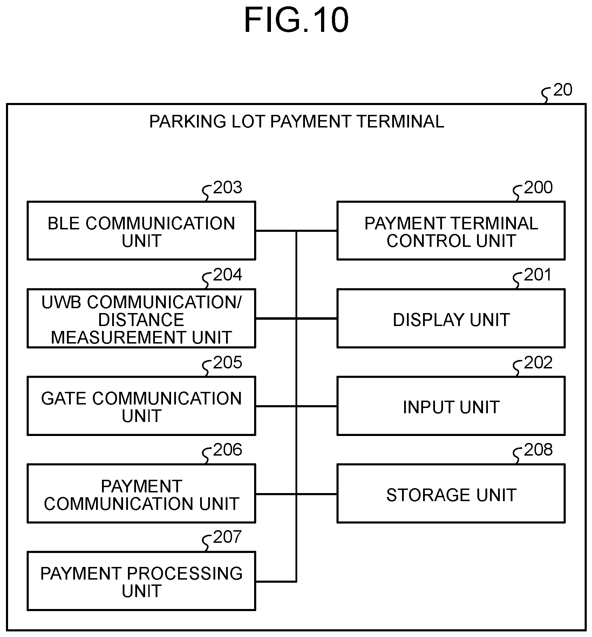

FIG. 10 is a functional block diagram of an example illustrating functions of the parking lot payment terminal 20 according to the embodiment.

In FIG. 10, the parking lot payment terminal 20 includes a payment terminal control unit 200, a display unit 201, an input unit 202, a BLE communication unit 203, an UWB communication/distance measurement unit 204, a gate communication unit 205, a payment communication unit 206, payment processing unit 207, and a storage unit 208.

These units, namely, the payment terminal control unit 200, the display unit 201, the input unit 202, the BLE communication unit 203, the UWB communication/distance measurement unit 204, the gate communication unit 205, the payment communication unit 206, the payment processing unit 207, and the storage unit 208, are constituted by the operation of the payment control program according to the embodiment on the CPU 2000. Not limited to this, some or all of the payment terminal control unit 200, the display unit 201, the input unit 202, the BLE communication unit 203, the UWB communication/distance measurement unit 204, the gate communication unit 205, the payment communication unit 206, the payment processing unit 207, and the storage unit 208 may be constituted by hardware circuits that operate in cooperation with each other.

The payment terminal control unit 200 controls the entire operation of the parking lot payment terminal 20. The display unit 201 generates display control information and controls display on the display device 2014, for example. The input unit 202 receives a user operation on the input device 2013 and generates control information according to the user operation.

The BLE communication unit 203 controls the BLE communication I/F 2008 to execute communication as a peripheral apparatus of the BLE. The UWB communication/distance measurement unit 204 controls the UWB communication I/F 2009 to perform communication as an initiator of the UWB and execute distance measurement.

The gate communication unit 205 controls opening/closing of the gate bar 21a by gate barrier 21 through the gate communication I/F 2007. The payment communication unit 206 controls the communication I/F 2006 to communicate with the payment server 30, for example. The payment processing unit 207 executes payment processing with the mobile terminal 10 based on information acquired from the mobile terminal 10 by the BLE communication unit 203, for example. The payment processing unit 207 may transmit the processing result of the payment processing to the payment server 30 by the payment communication unit 206, for example.

The storage unit 208 controls reading and writing of data from and to the storage apparatus 2005 and the RAM 2002. Not limited thereto, and the storage unit 208 may control reading and writing of data from and to a register included in the CPU 2000, for example. Hereinafter, in order to avoid complexity, reading and writing of data by the storage unit 208 from and to the storage apparatus 2005 and the RAM 2002 will be appropriately described as reading and writing of data by the storage unit 208 or the like.

In the parking lot payment terminal 20, the CPU 2000 executes the payment control program according to the embodiment to constitute each of the payment terminal control unit 200, the display unit 201, the input unit 202, the BLE communication unit 203, the UWB communication/distance measurement unit 204, the gate communication unit 205, the payment communication unit 206, the payment processing unit 207, and the storage unit 208 described above, as a module on a main storage area in the RAM 2002, for example.

The payment control program is supposed to be acquirable from the outside via a network such as the Internet by communication via the communication I/F 2006 and installable on the parking lot payment terminal 20. Not limited thereto, and the payment control program may be provided from the outside via a data I/F (not illustrated). Furthermore, the payment control program may be provided by being stored in a detachable storage medium such as a compact disk (CD), a digital versatile disk (DVD), or a universal serial bus (USB) flash drive.

(3-2. Specific description of embodiment)

Next, the embodiment of the present disclosure will be described more specifically.

(3-2-1. Processing up to UWB ranging)

First, processing up to UWB ranging will be described.

Power consumption in UWB devices that perform communication using UWB is higher than in BLE devices that perform communication using BLE, for example. Therefore, when a UWB device is used in a battery-driven device such as the mobile terminal 10, in order to suppress power consumption of the UWB device, the communication by the BLE device is typically used as an out-of-band communication path for starting the UWB device and sharing the UWB communication setting parameters.

A typical implementation example is a case where the communication uses a combination in which the mobile terminal 10 that may simultaneously perform BLE communication for a plurality of uses operates as a central device with the parking lot payment terminal 20 side operating as a peripheral device.

It is possible in terms of specifications to allow the parking lot payment terminal 20, which is a peripheral device, to perform communication simultaneously in parallel with a plurality of central devices (mobile terminals 10). However, since the peripheral device cannot control the communication timing, the case where the peripheral device communicates with a plurality of central devices in parallel connection would cause a collision of wireless communication timings with the plurality of central devices, leading to occurrence of a communication error. Therefore, the peripheral device generally communicates only with one central device.

(3-2-1-1. Example in a case where there is one target)

Next, a case where the UWB ranging target is one mobile terminal 10 when the payment processing is performed by combining BLE and UWB will be described.

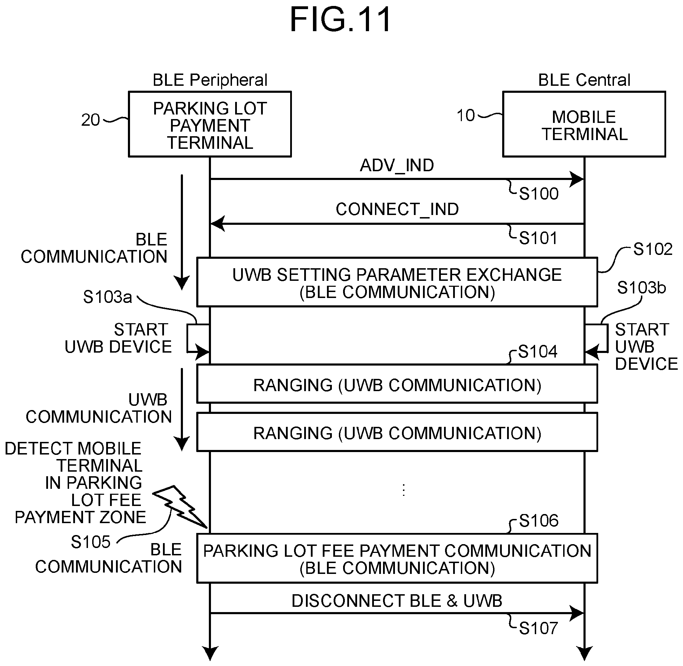

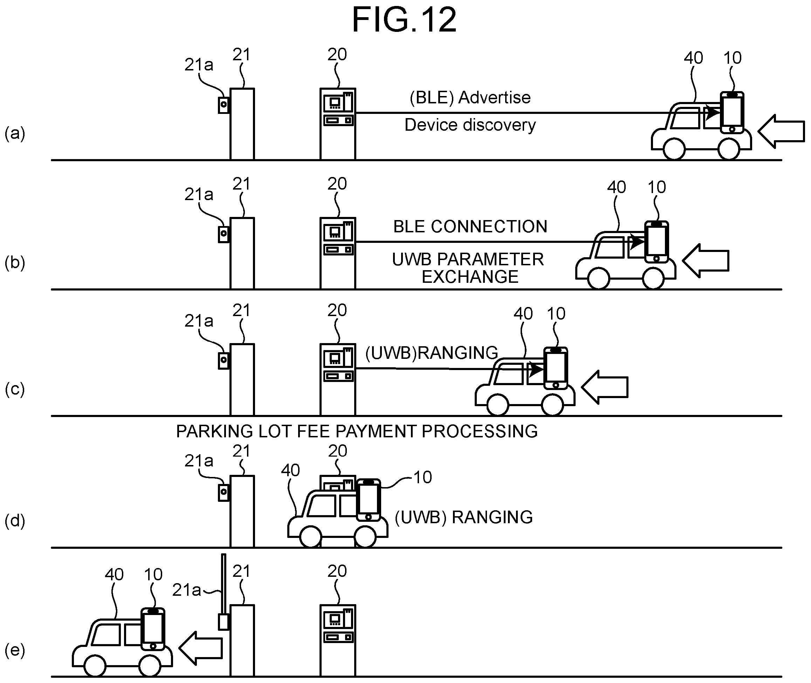

Here, typical connection processing using a combination of UWB and BLE will be described as an example. FIG. 11 is a sequence diagram illustrating an example of typical connection processing using a combination of UWB and BLE. FIG. 12 is a schematic diagram illustrating an example of a positional relationship between the mobile terminal 10 (vehicle 40) and the parking lot payment terminal 20 in each stage of typical connection processing using a combination of UWB and BLE.

In step S100, the parking lot payment terminal 20 searches for the mobile terminal 10 by transmitting a BLE advertisement packet ADV_IND (hereinafter, referred to as packet ADV_IND). In response to the packet ADV_IND, the mobile terminal 10 returns a connection request packet CONNECT_IND (hereinafter, referred to as packet CONNECT_IND) to the parking lot payment terminal 20 (step S101).

Note that the mobile terminal 10 is held by an occupant of a certain vehicle 40. At the point of step S101, as illustrated in section (a) of FIG. 12, the vehicle 40 including the mobile terminal 10 is traveling toward the parking lot payment terminal 20.

The parking lot payment terminal 20 makes a BLE connection with the mobile terminal 10 that has responded to the packet ADV_IND. In step S102, the parking lot payment terminal 20 and the mobile terminal 10 exchange the UWB setting parameters using the BLE communication path. The UWB setting parameters exchanged here are parameters necessary for performing distance measurement by UWB, and include at least session ID and address information (Media Access Control Address (MAC address) or the like) of the other party's equipment.

At the point of step S102, as illustrated in section (b) of FIG. 12, the vehicle 40 including the mobile terminal 10 is traveling toward the parking lot payment terminal 20, and is closer to the parking lot payment terminal 20 than at the point of step S101 described above.

When having completed the exchange of the UWB setting parameters, the parking lot payment terminal 20 and the mobile terminal 10 start the UWB devices (for example, the UWB communication I/Fs 1009 and 2009) in steps S103a and S103b, respectively.

In step S104, the parking lot payment terminal 20 performs UWB communication with the mobile terminal 10 and starts distance measurement by UWB. Hereinafter, the distance measurement by UWB may be referred to as UWB ranging.

At the point of step S104, as illustrated in section (c) of FIG. 12, the vehicle 40 including the mobile terminal 10 is still traveling toward the parking lot payment terminal 20, and is further closer to the parking lot payment terminal 20 than at the point of step S102 described above. In addition, the parking lot payment terminal 20 has started distance measurement to the vehicle 40 (mobile terminal 10) by UWB ranging.

When the parking lot payment terminal 20 detects, by the UWB ranging, that the mobile terminal 10 has entered a designated range (parking lot fee payment zone) in which the parking lot payment terminal 20 is to perform payment communication (step S105), the parking lot payment terminal 20 performs payment communication using the BLE communication path (step S106).

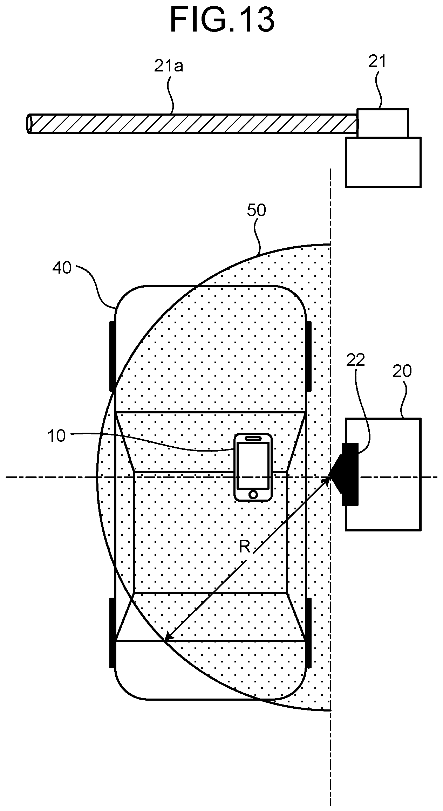

FIG. 13 is a schematic diagram for illustrating a parking lot fee payment zone. As illustrated in FIG. 13, a range within a predetermined radius R centered on the mobile communication unit 22 is set as a parking lot fee payment zone 50. The parking lot payment terminal 20 determines whether the mobile terminal 10 has entered the parking lot fee payment zone 50 based on the distance to the mobile terminal 10 obtained by the UWB ranging (distance measurement) performed by the mobile communication unit 22.

Section (d) in FIG. 12 illustrates a state in which the vehicle 40 (mobile terminal 10) has entered the parking lot fee payment zone 50 and arrived immediately in front of the parking lot payment terminal 20. The vehicle 40 temporarily stops, for example, at a position immediately in front of the parking lot payment terminal 20, and waits for a normal termination of the payment communication.

When the payment communication in step S106 makes a normal termination, the UWB and BLE connections between the parking lot payment terminal 20 and the mobile terminal 10 are disconnected (step S107). After the processing of step S107, the gate bar 21a is opened under the control of the gate barrier 21 of the parking lot payment terminal 20, enabling, as illustrated in section (e) of FIG. 12, the vehicle 40 including the mobile terminal 10 to enter the parking lot or exit from the parking lot.

(Processing in presence of plurality of mobile terminals around the parking lot payment terminal)

Next, processing in the presence of a plurality of mobile terminals 10 around the parking lot payment terminal 20 will be described.

In the case of performing communication using both UWB and BLE as described above, it is difficult, due to the nature of the BLE communication protocol, to select and connect a specific device from among an unspecified large number of devices existing within the communicable range of BLE in a state where address information or the like is unknown. Therefore, in the presence of a plurality of mobile terminals 10 around the parking lot payment terminal 20, there is a high possibility of failure in establishing a connection with the desired mobile terminal 10 located in the vehicle arriving immediately in front of the parking lot payment terminal 20.

This problem can be solved by the parking lot payment terminal 20 performing BLE and UWB communication with the plurality of surrounding mobile terminals 10 to search for and connect to the mobile terminal 10 likely to be a payment communication target.

It would be ideal to enable the UWB ranging to be performed with all the mobile terminals 10 located around the parking lot payment terminal 20 and likely to be payment communication targets. However, since the parking lot payment terminal 20 is a peripheral device in the BLE, it is difficult to simultaneously perform BLE communication with a plurality of mobile terminals 10 as described above. It is also conceivable to mount a large number of BLE peripheral devices on the parking lot payment terminal 20, but this lacks economic rationality and is considered to be unrealistic.

In order to perform the UWB ranging for a large number of mobile terminals 10, conceivable methods include a method in which the parking lot payment terminal 20 performs the UWB ranging for one mobile terminal 10 according to the sequence described with reference to FIG. 11, then disconnects the BLE connection to the mobile terminal 10, and then searches for another mobile terminal 10 by BLE advertisement again.

(3-2-1-2. Example of a case in presence of plurality of targets)

Next, a case where the UWB ranging target is a plurality of mobile terminals 10 when the payment processing is performed by combining BLE and UWB will be described.

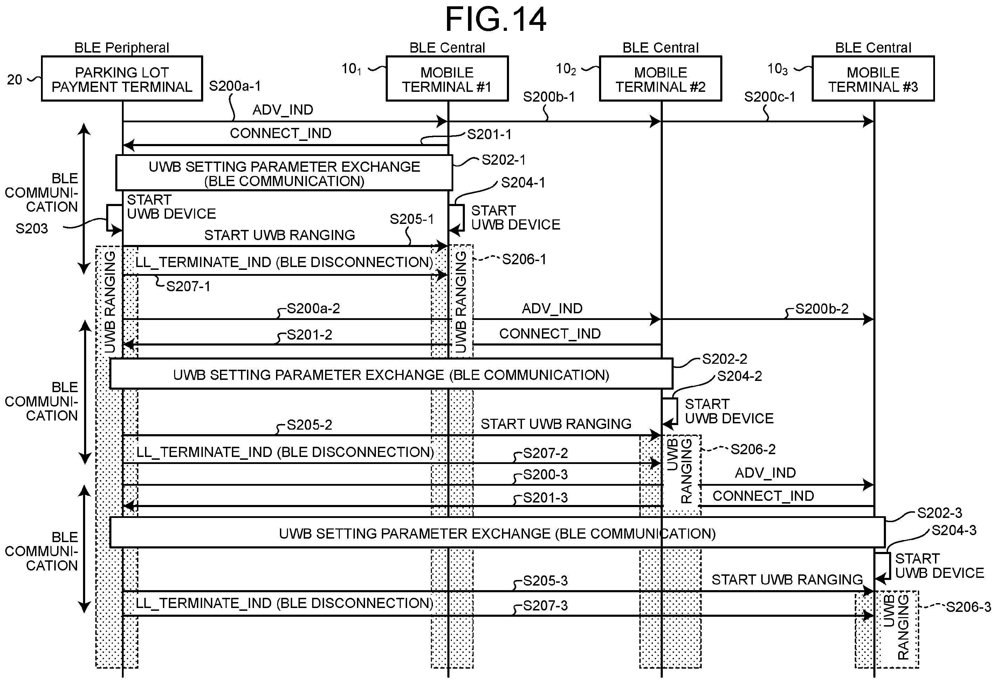

FIG. 14 is a sequence diagram illustrating an example of processing in which the parking lot payment terminal 20 performs UWB ranging for a large number of mobile terminals 10.

In FIG. 14, for example, the processing in steps S200a-1 to S205-1 is similar to the processing in steps S100 to S104 described with reference to FIG. 11.

In steps S200a-1 to S200c-1, the parking lot payment terminal 20 searches for the mobile terminals $10_1, 10_2, 10_3,...$ by BLE packet ADV_IND transmission. In response to the packet ADV_IND, the mobile terminal $10_1$, among the mobile terminals $10_1, 10_2, 10_3,...$, for example, returns a packet CONNECT_IND to the parking lot payment terminal 20 (step S201-1).

The parking lot payment terminal 20 makes a BLE connection with the mobile terminal 10 that has responded to the packet ADV_IND. In step S202-1, the parking lot payment terminal 20 and the mobile terminal $10_1$ exchange the UWB setting parameters using the BLE communication path.

When the exchange of the UWB setting parameters with the mobile terminal $10_1$ is completed, the parking lot payment terminal 20 starts the UWB device in step S203. Similarly, when the exchange of the UWB setting parameters with the parking lot payment terminal 20 is completed, the mobile terminal $10_1$ starts the UWB device in step S204-1.

In step S205-1, the parking lot payment terminal 20 performs UWB communication with the mobile terminal 10 and starts UWB ranging. UWB ranging is performed onto the mobile terminal $10_1$ by the UWB device of the parking lot payment terminal 20 (step S206-1). When the UWB ranging is started and the UWB ranging is executed, the parking lot payment terminal 20 transmits an opcode LL_TERMINATE_IND to the mobile terminal $10_1$ and disconnects the BLE connection with the mobile terminal $10_1$ (step S207-1).

Note that the UWB ranging onto the mobile terminal $10_1$ by the parking lot payment terminal 20 started in step S205-1 is continuously executed.

After disconnecting the BLE connection with the mobile terminal $10_1$ in step S207-1, the parking lot payment terminal 20 again transmits a BLE packet ADV_IND (step S200a-2 and step S200b-2) and starts searching for another mobile terminal 10 (in this example, mobile terminals $10_2$, $10_3$,...). For example, it is assumed that the mobile terminal $10_2$ returns a packet CONNECT_IND to the parking lot payment terminal 20 in response to the packet ADV_IND (step S201-1).

Thereafter, UWB ranging onto the mobile terminals $10_2$, $10_3$,... is executed by repeating processing similar to that in steps S202-1 to S207-1 described above. In the example of FIG. 14, the parking lot payment terminal 20 executes UWB ranging onto the mobile terminal $10_2$ in the processing of steps S201-2 to S207-2, and executes UWB ranging onto the mobile terminal $10_3$ in the processing of steps S201-3 to S207-3.

In this manner, the parking lot payment terminal 20 disconnects the BLE connection with a certain mobile terminal 10 in response to the start of UWB ranging onto the mobile terminal 10, making it possible to search a plurality of mobile terminals 10 one after another and execute UWB ranging accordingly.

Incidentally, the BLE connection to the mobile terminals $10_1$, $10_2$, $10_3$,... by the parking lot payment terminal 20 is generally performed in a random order. That is, in the example of FIG. 14, the mobile terminal $10_1$, the mobile terminal $10_2$, and the mobile terminal $10_3$ are connected in this order in the illustration, but this is just for the sake of description, and in practice, for example, any of the mobile terminals $10_1$ to $10_3$ may be connected first.

(3-2-2. Problem when combining UWB and BLE)

In a case where payment processing is performed by combining UWB and BLE, there are two problems to be described below. A first problem relates to designation of a connection destination of BLE reconnection. The second problem relates to the limitation of the number of UWB devices as a target of UWB ranging.

(3-2-2-1. Designation of connection destination of BLE reconnection)

First, designation of a connection destination of BLE reconnection, which is the first problem, will be described. Using the sequence illustrated in FIG. 14, the parking lot payment terminal 20 is connected to a desired mobile terminal 10 and can perform UWB ranging. On the other hand, after detecting that the mobile terminal 10 enters the parking lot fee payment zone 50 by UWB ranging, the parking lot payment terminal 20 needs to perform BLE reconnection with the mobile terminal 10 in order to perform payment communication.

However, BLE advertisement is basically performed as broadcast, and thus reconnection by designating a specific device is not possible in normal usage. Therefore, in order to perform BLE reconnection, it is necessary to designate the mobile terminal 10 in the parking lot fee payment zone 50 by some means.

(Advertisement packet ADV_DIRECT_ IND)

One of means for the parking lot payment terminal 20 to designate the mobile terminal 10 and perform BLE connection is a method of using an advertisement packet ADV_DIRECT_IND (hereinafter, referred to as Packet ADV_DIRECT_IND) defined in the Bluetooth (registered trademark) protocol.

When a Bluetooth device address (BD address) of the central device in Bluetooth is known, the peripheral device transmits the packet ADV_DIRECT_IND including the address of the central device as a target in the packet ADV_DIRECT_IND, so as to allow only the central device with the matching BD address to respond to enable connection to the specific device.

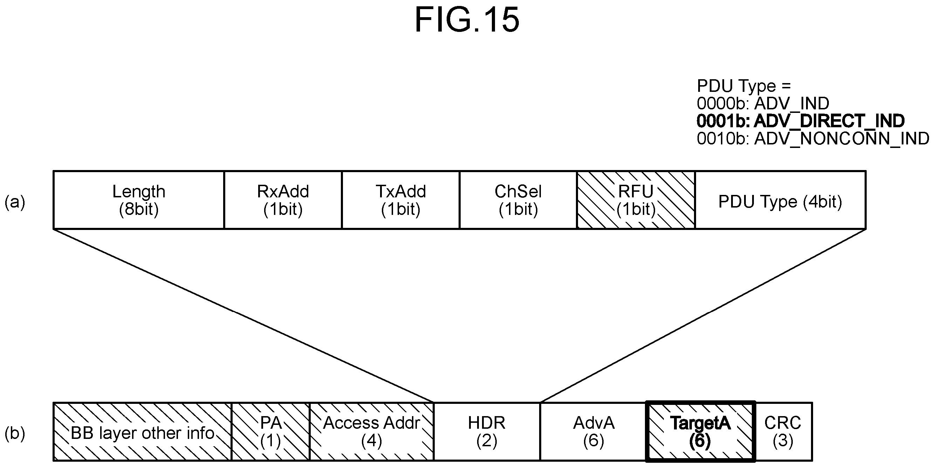

FIG. 15 is a schematic diagram illustrating a packet configuration of a link layer in BLE. As illustrated in section (b) of FIG. 15, the packet of the link layer includes a 2-byte field HDR following a 1-byte field PA and a 4-byte field Access Addr. The field HDR is followed by a 6-byte field AdvA and a 6-byte field TargetA, with a 3-byte Cyclic Redundancy Check (CRC) code arranged at the end. The fields AdvA and TargetA constitute a payload.

Section (a) in FIG. 15 illustrates a configuration of field HDR. The field HDR includes an 8-bit field Length and 1-bit fields RxAdd, TxAdd, ChSel, and RFU, with a 4-bit field PDU Type arranged at the end.

The field PDU Type stores information indicating a type of the Protocol Data Unit (PDU). When the value of the PDU Type field is "0000b", this indicates that the packet is a packet ADV_IND, and the value "0001b" indicates that the packet is a packet ADV_DIRECT_IND. When the value of the PDU Type field is "0010b", this indicates that the packet is a packet ADV_NONCONN_IND.

In the packet ADV_DIRECT_IND, the value of the PDU Type field is set to "0001b". In the payload, the address of the peripheral device is stored in the field AdvA, and the address of the central device is stored in the field Target.

Here, the address of the peripheral device stored in the field AdvA is a BD address of the parking lot payment terminal 20. In addition, the address of the central device stores a BD address of the mobile terminal 10 designated as a connection partner. The BD address of the mobile terminal 10 can be acquired from the packet CONNECT_IND responded to the packet ADV_IND in step S200a-1 in FIG. 14, for example.

The parking lot payment terminal 20 uses this protocol to store the BD address of the mobile terminal 10 when performing a BLE connection (first connection, for example, step S200a-1, step S201-1 of FIG. 14) for starting UWB ranging. In advertisement at the time of BLE reconnection, the parking lot payment terminal 20 transmits the packet ADV_DIRECT_IND including the BD address. In this manner, the parking lot payment terminal 20 can designate and connect to the desired mobile terminal 10 by using the packet ADV_DIRECT_IND.

Meanwhile, in recent years, a BLE device such as a mobile terminal or a smartwatch equipped with a BLE communication function often uses a temporary random number (random address) as a BD address from the viewpoint of privacy protection. Furthermore, the case of using a random address is a case of using a dynamically updated address referred to as a private address, among the types of random addresses.

The private address is periodically updated in the BLE device. Therefore, depending on the timing of BLE reconnection, the BD address of the mobile terminal 10 may have been updated from the BD address stored when the parking lot payment terminal 20 made the first connection. In this case, since the mobile terminal 10 cannot respond to the packet ADV_DIRECT_IND storing a BD address different from the updated own BD address, leading to occurrence of a reconnection failure.

In addition, there are many cases where an operating system (OS) of the currently distributed mobile terminal 10 does not support a scan function of the packet ADV_DIRECT_IND as a software Application Programming Interface (API) of Bluetooth. In this case, the packet ADV_DIRECT_IND cannot be used in the first place.

Furthermore, there may be a case where a plurality of mobile terminals 10 exits in one vehicle 40, leading to occurrence of a case where a plurality of target mobile terminals 10 exits in the parking lot fee payment zone 50. In such a situation, there is a need to provide a means by which the user in the vehicle 40 selects which mobile terminal 10 is to be used to perform parking lot fee payment. In this case, it is difficult to handle the situation with ADV_DIRECT_IND in which only one device is designated for connection.

(3-2-2-2. Limiting of the number of UWB devices subject to UWB ranging)

Next, limiting the number of UWB devices to be subjected to UWB ranging, which is a second problem, will be described.

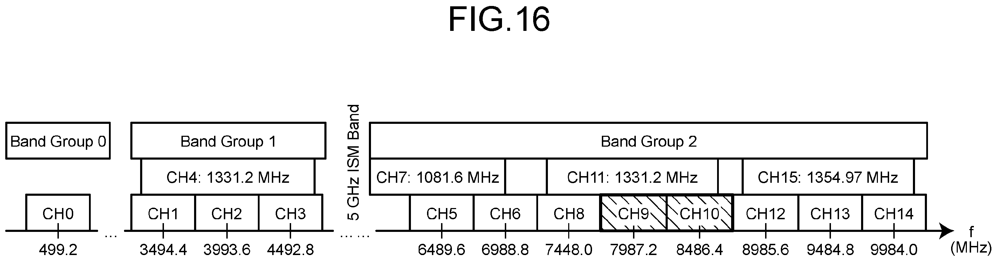

FIG. 16 is a schematic diagram illustrating a frequency band allocated to UWB communication. As illustrated in FIG. 16, in UWB communication, band groups 0 and 1 of a frequency band lower than a frequency of 5 GHz (gigahertz) and a band group 2 of a frequency band higher than the frequency are defined as used frequencies. For each of the band group 0 to 2, channel CH0 (band group 0), channels CH1 to 3 (band group 1), and channels CH5, 6, and 8 to 14 (band group 2) are respectively defined, in which each channel has a frequency band of 499.2 MHz (megahertz) with each band determined so as not to overlap each other. In addition, channels each having a frequency band of 1 GHz or more are defined as individual channels, specifically, channel CH4 in the band group 1 and channels CH7, 11, and 15 in the band group 2.

Among these channels, channels CH9 and 10 are assigned as channels that can be used outdoors in Japan. In practice, channel CH10 is often not supported by UWB devices, and substantially only one channel of channel CH9 is available.

In this manner, in Japan, there are few UWB communication channels available outdoors, making it necessary to avoid interference by performing scheduling in the time domain. Therefore, simultaneous communication made by a large number of devices can cause radio interference and communication failure, and thus, it is necessary, in principle, to reduce the UWB communication amount as much as possible.

On the other hand, there is a link budget (connectable number) in UWB devices as implementation limit, and thus, the number of UWB devices simultaneously connectable to the parking lot payment terminal 20 has a limit (for example, eight).

Furthermore, as described with reference to FIG. 14, the procedure until the search of the BLE mobile terminal 10 and the start of UWB ranging, performed by the parking lot payment terminal 20, is taken as sequential operations to be sequentially executed onto each mobile terminal 10. Therefore, the parking lot payment terminal 20 requires a certain amount of time after the connection and the start of UWB ranging with one mobile terminal 10 until the connection and the start of UWB ranging with the next one mobile terminal 10.

Here is an assumable case where the surroundings of the parking lot payment terminal 20 are formed as passages for ordinary pedestrians. In this case, there is a situation where a large number of mobile terminals 10 unexpectedly exist around the parking lot payment terminal 20, such as a case where a plurality of pedestrians passing through the passage holds the mobile terminals 10.

When the parking lot payment terminal 20 happens to have a UWB connection with the mobile terminal 10 held by the pedestrian passing through these passages, there would be a failure in UWB connection with the mobile terminal 10 in the vehicle 40 that can be a payment communication target due to the limitation of the connectable number of UWB devices, leading to a possibility of a problem in entrance of the vehicle 40 into the parking lot or exit from the parking lot.

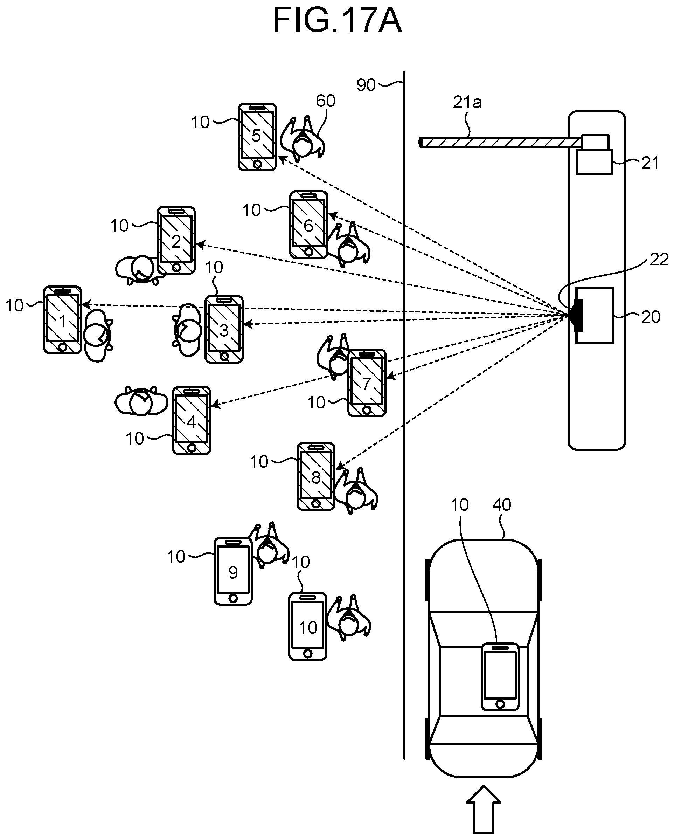

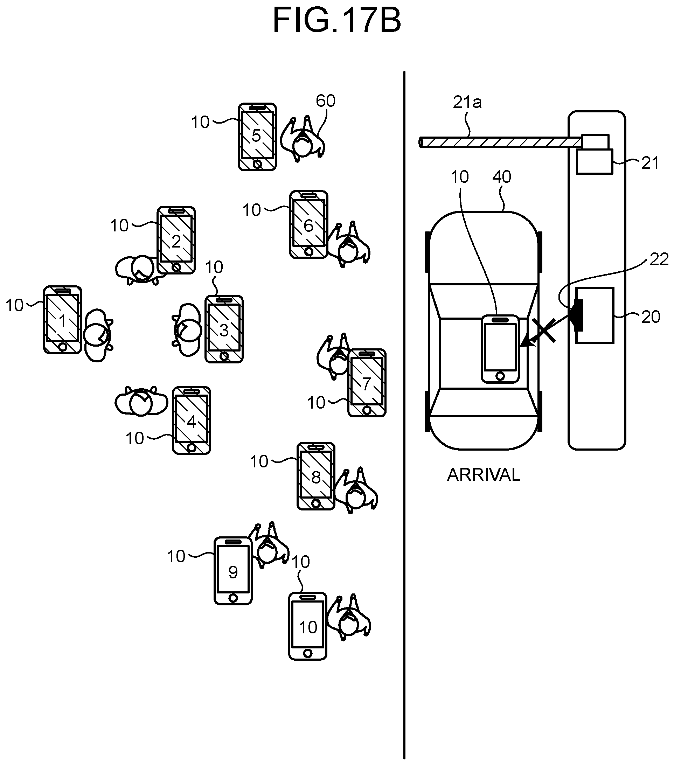

FIGS. 17A and 17B are schematic diagrams for illustrating connection of a UWB device in a case where a passage for ordinary pedestrians exists in proximity to the parking lot payment terminal 20. In FIGS. 17A and 17B, it is assumed that a left side of a boundary line 90 is a passage, and a plurality of pedestrians 60 holding mobile terminals 10 is passing through the passage. In addition, it is assumed that the number of UWB devices simultaneously connectable to the parking lot payment terminal 20 is eight.

In FIG. 17A, the vehicle 40 including the mobile terminal 10 is traveling toward the parking lot payment terminal 20. In the example of FIG. 17A, before the vehicle 40 enters the parking lot fee payment zone 50 of the parking lot payment terminal 20, the parking lot payment terminal 20 has performed UWB connection to the upper limit number of mobile terminals 10 (hatched eight terminals in the figure) as the simultaneously connectable number, with the mobile terminals 10 each being held by the plurality of pedestrians 60 passing through the passage.

As a result, as illustrated in FIG. 17B, the mobile terminal 10 in the vehicle 40 cannot establish UWB connection with the parking lot payment terminal 20 even though the mobile terminal 10 has reached immediately in front of the parking lot payment terminal 20. Accordingly, the parking lot payment terminal 20 cannot detect the entry of the vehicle 40 into the parking lot fee payment zone 50, and cannot execute the subsequent parking lot fee payment processing to be performed by BLE communication (refer to FIG. 11).

(Connection delay related to order of BLE connection)

Furthermore, there is another assumable case where, similarly due to the presence of a large number of mobile terminals 10, a delay occurs in the start of UWB ranging with the mobile terminals 10 in the vehicle 40 to perform payment communication even though the vehicle 40 has arrived immediately in front of the parking lot payment terminal 20. In this case, it takes a long time before completion of the payment communication between the parking lot payment terminal 20 and the mobile terminal 10 and opening of the gate bar 21a of the parking lot.

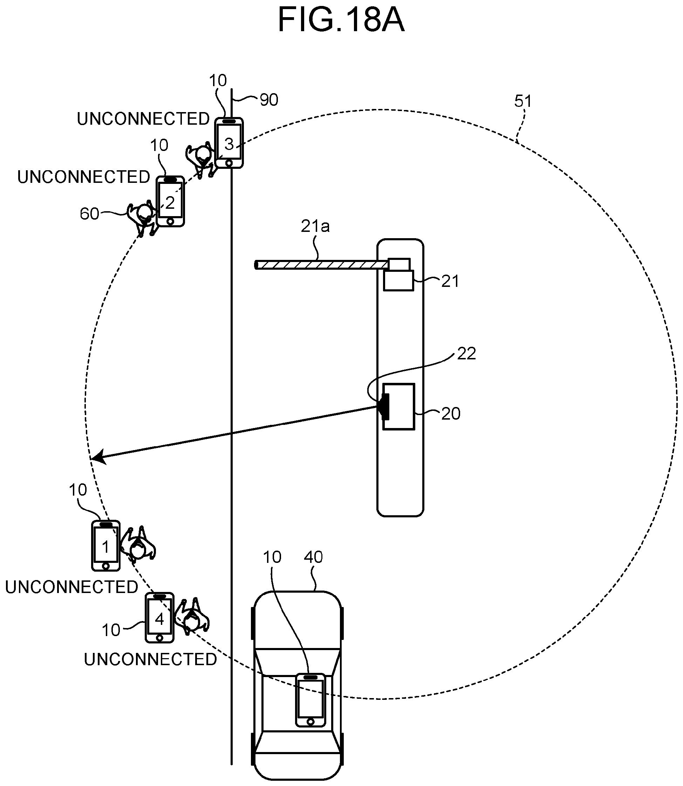

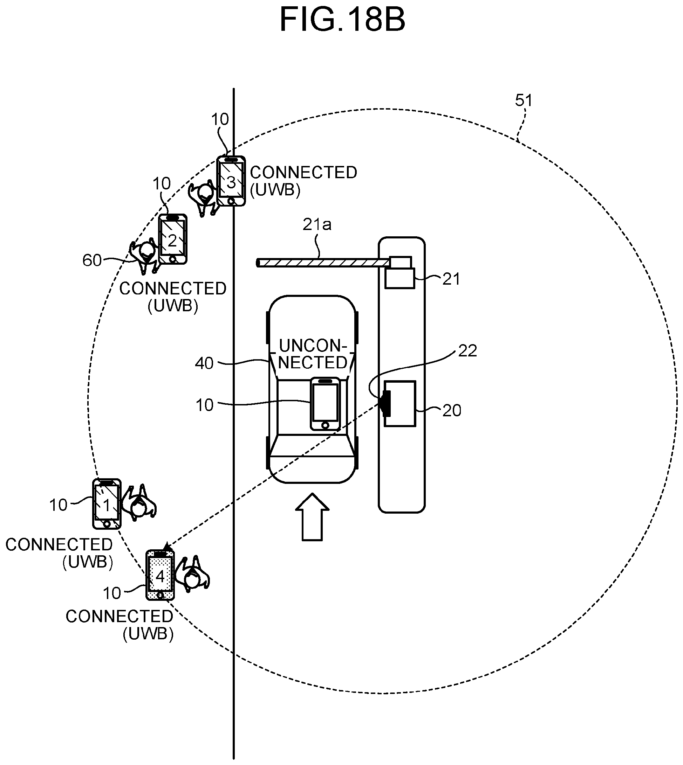

FIGS. 18A and 18B are schematic diagrams for illustrating that communication of the vehicle 40 with the parking lot payment terminal 20 is delayed due to the presence of a large number of mobile terminals 10 outside the vehicle 40.

As illustrated in FIG. 18A, here is an assumable case where the mobile terminal 10 of the vehicle 40 and a plurality of mobile terminals 10 held by a plurality of pedestrians 60 passing on a passage are present outside a BLE communication range 51 of the parking lot payment terminal 20. In the state illustrated in FIG. 18A, since all the mobile terminals 10 are outside the BLE communication range 51, and thus are unconnected to the parking lot payment terminal 20.

FIG. 18B illustrates a state in which the vehicle 40 has reached immediately in front of the parking lot payment terminal 20, the mobile terminal 10 in the vehicle 40 has moved into the BLE communication range 51, and each mobile terminal 10 held by each pedestrian 60 has also moved into the BLE communication range 51.

Here, as described above, the connection by BLE is performed sequentially in random order for each mobile terminal 10. Therefore, there is a possibility that the mobile terminal 10 of each pedestrian 60 has a BLE connection with the parking lot payment terminal 20 before establishment of the BLE connection with the mobile terminal 10 in the vehicle 40.

In the example of FIG. 18B, the mobile terminals 10 of number 1 to 3 have completed BLE connection by advertisement, that is, in UWB connection completed states, while the mobile terminal 10 of number 4 is during a BLE connection by advertisement. In contrast, the mobile terminal 10 in the vehicle 40 is unconnected. That is, in this example, connection processing of the mobile terminal 10 in the vehicle 40 is to be started after completion of the BLE connection of the mobile terminal 10 of number 4, taking a long time before execution of the payment processing and opening of the gate bar 21a.

(3-2-3. BLE reconnection processing)

Next, BLE reconnection processing according to the embodiment of the present disclosure will be described. That is, the following will describe the processing, in the parking lot fee payment system 1 according to the embodiment, corresponding to designation of the connection destination of the BLE reconnection, which is the first problem described above.

That is, in the following, the parking lot payment terminal 20 connects to the mobile terminal 10 by BLE advertisement, and exchanges the UWB setting parameters to perform UWB ranging. The parking lot payment terminal 20 performs reconnection using BLE communication with the mobile terminal 10 specified by the UWB ranging. This series of processing will be specifically described.

(3-2-3-1. Example in a case where there is one target)

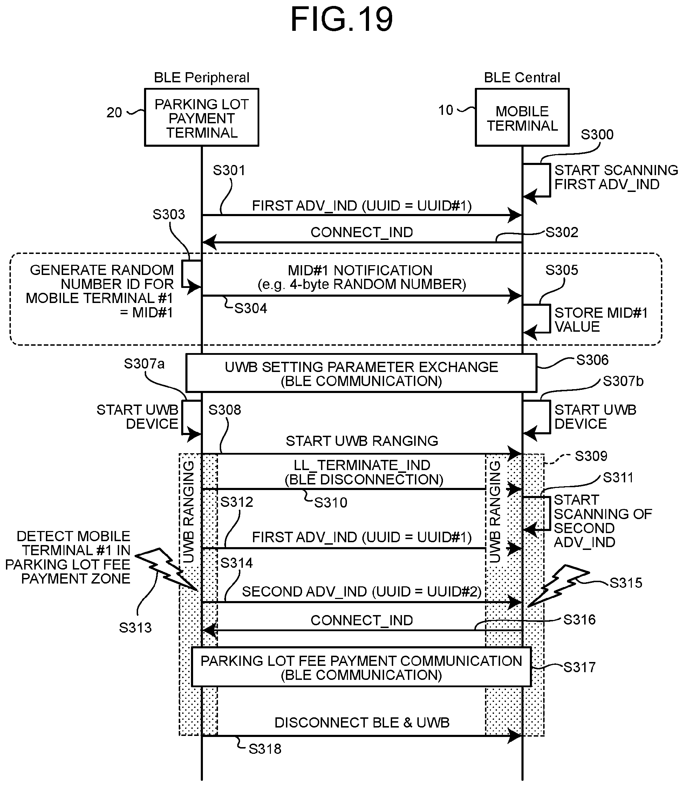

BLE reconnection processing in a case where there is one connection target according to the embodiment will be described. FIG. 19 is a sequence diagram illustrating an example of BLE reconnection processing in a case where there is one connection target according to the embodiment.

In FIG. 19, in step S300, the mobile terminal 10 starts scanning a first packet ADV_IND. In step S301, the parking lot payment terminal 20 transmits the first packet ADV_IND and searches for the mobile terminal 10. At this time, the parking lot payment terminal 20 generates a first Universally Unique IDentifier (UUID) value, stores the generated first UUID value in the first packet ADV_IND, and transmits the first packet ADV_IND storing the value. A method of generating the first UUID value by the parking lot payment terminal 20 is not particularly limited, but it is conceivable to assign the UUID value in advance for each payment application. The first UUID value may be stored, for example, in a field ADV_DATA of the packet ADV_IND. In the figure, the first UUID value is denoted as UUID#1.

In response to the packet ADV_IND, the mobile terminal 10 returns a packet CONNECT_IND to the parking lot payment terminal 20 (step S302). The parking lot payment terminal 20 makes a BLE connection with the mobile terminal 10 that has responded to the packet ADV_IND.

When having completed the BLE connection with the mobile terminal 10, the parking lot payment terminal 20 generates a first identification information MID value, which is identification information for specifying the mobile terminal 10 (step S303). For example, the parking lot payment terminal 20 may generate the identification information MID value using a 4-byte value of a random number. The parking lot payment terminal 20 transmits the generated first identification information MID value to the mobile terminal 10 (step S304). In the drawing, the first identification information MID value is denoted as MID#1.

When having received the first identification information MID transmitted from the parking lot payment terminal 20, the mobile terminal 10 stores the received first identification information MID value as identification information for identifying itself (step S305). The mobile terminal 10 may store the first identification information MID value in the RAM 1002 or the storage apparatus 1005. The storage is not limited thereto, and the mobile terminal 10 may store the received first identification information MID value in a register included in the CPU 1000.

The parking lot payment terminal 20 and the mobile terminal 10 exchange the UWB setting parameters using the BLE communication path (step S306). When having completed the exchange of the UWB setting parameters in step S306, the parking lot payment terminal 20 and the mobile terminal 10 start the UWB devices in steps S307a and S307b, respectively.

When each UWB device is started, the parking lot payment terminal 20 performs UWB communication with the mobile terminal 10 and starts UWB ranging (step S308). UWB ranging by the UWB device of the parking lot payment terminal 20 is performed onto the mobile terminal 10 (step S309). When the UWB ranging is started and the UWB ranging is executed, the parking lot payment terminal 20 transmits an opcode LL_TERMINATE_IND to the mobile terminal 10 and disconnects the BLE connection with the mobile terminal 10 (step S310).

After disconnecting the BLE connection in step S310, the mobile terminal 10 starts scanning the second packet ADV_IND in which the UUID value includes the first identification information MID value assigned to the mobile terminal itself (step S311). The second packet ADV_IND includes a second UUID value to be described below as the UUID value.

The parking lot payment terminal 20 transmits the first packet ADV_IND including the first UUID value again for searching for another mobile terminal 10 (step S312).

Here, it is assumed that the parking lot payment terminal 20 has detected the mobile terminal 10 in the parking lot fee payment zone 50 by the UWB ranging started in step S308 (step S313). When having detected the mobile terminal 10 in the parking lot fee payment zone 50, the parking lot payment terminal 20 stops the transmission of the first packet ADV_IND and transmits the second packet ADV_IND (step S314). The parking lot payment terminal 20 generates a second UUID value having a value different from the first UUID value described above, stores the second UUID value in the second packet ADV_IND, and transmits the second packet ADV_IND storing the value. In the figure, the second UUID value is denoted as UUID#2.

The mobile terminal 10 receives the second packet ADV_IND transmitted from the parking lot payment terminal 20 (step S315). When having recognized that the first identification information MID value stored in step S305 is included in the second UUID value stored in the received second packet ADV_IND, the mobile terminal 10 immediately transmits the packet CONNECT_IND to the parking lot payment terminal 20, for example (step S316). This establishes BLE reconnection between the parking lot payment terminal 20 and the mobile terminal 10.

After BLE reconnection is established, payment communication is performed between the parking lot payment terminal 20 and the mobile terminal 10 using the reconnected BLE communication (step S317). When the payment communication in step S317 makes a normal termination, the UWB and BLE connections between the parking lot payment terminal 20 and the mobile terminal 10 are disconnected (step S318).

In this manner, in the parking lot fee payment system 1 according to the embodiment, the parking lot payment terminal 20 transmits, to the mobile terminal 10, the first identification information for specifying the mobile terminal 10 of the connection destination in the BLE connection for exchanging the UWB setting parameter for UWB ranging, and disconnects the BLE connection when the UWB ranging is started. When the mobile terminal 10 is specified by the UWB ranging, the parking lot payment terminal 20 performs reconnection between the mobile terminal 10 and the BLE using the first identification information, and executes payment processing with the mobile terminal 10. This makes it possible to perform cashless payment while the occupant of the vehicle 40 stays in the vehicle.

(3-2-3-2. Example of a case in presence of plurality of targets)

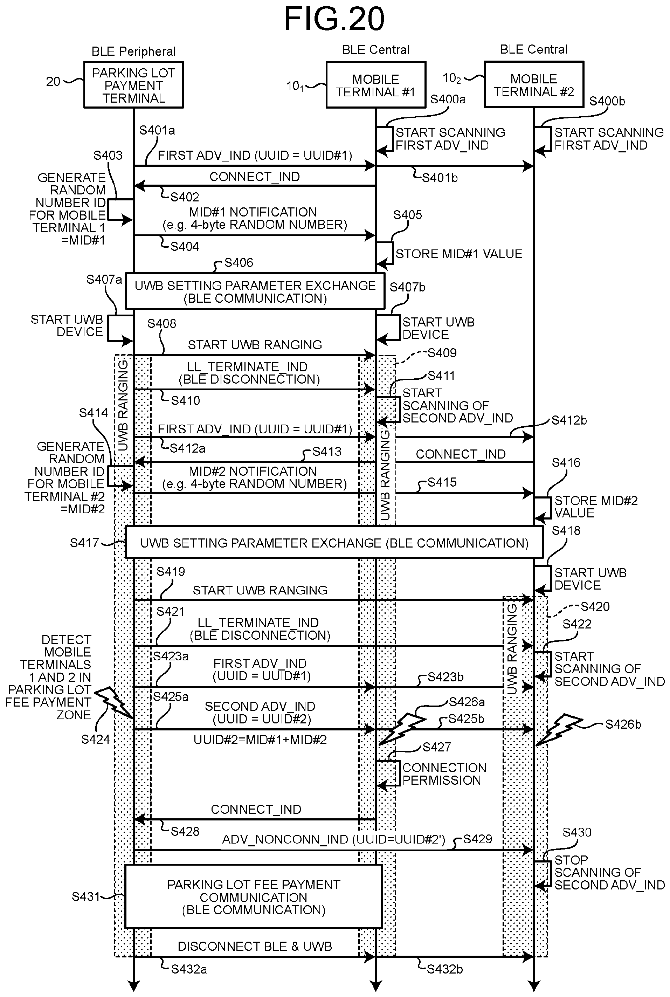

Next, BLE reconnection processing in the presence of a plurality of connection targets according to the embodiment will be described. FIG. 20 is a sequence diagram illustrating an example of BLE reconnection processing in the presence of a plurality of connection targets according to the embodiment.

In the example of FIG. 20, it is assumed that the parking lot payment terminal 20 makes a connection with two mobile terminals $10_1$ and $10_2$ (in the drawing, the terminals are also denoted as mobile terminal #1 and mobile terminal #2). The processing related to each of the mobile terminals $10_1$ and $10_2$ is similar to the processing described with reference to FIG. 19 with partial differences. Furthermore, in the example of FIG. 20, it is assumed that the parking lot payment terminal 20 is first connected to the mobile terminal $10_1$ among the mobile terminals $10_1$ and $10_2$.

In FIG. 20, in steps S400a and 400b, the mobile terminals $10_1$ and $10_2$ start scanning the first packet ADV_IND, respectively. In step S401, the parking lot payment terminal 20 transmits the first packet ADV_IND and searches for the mobile terminals $10_1$ and $10_2$. At this time, the parking lot payment terminal 20 generates the first UUID value, stores the generated first UUID value in the first packet ADV_IND, and transmits the first packet ADV_IND storing the value.

In response to the packet ADV_IND, the mobile terminal $10_1$ returns a packet CONNECT_IND to the parking lot payment terminal 20 (step S402). The parking lot payment terminal 20 makes a BLE connection with the mobile terminal $10_1$ that has responded to the packet ADV_IND.

When having completed the BLE connection with the mobile terminal $10_1$, the parking lot payment terminal 20 generates a first identification information MID value, which is identification information for specifying the mobile terminal $10_1$ (step S403). For example, the parking lot payment terminal 20 may generate the identification information MID value using a 4-byte value of a random number. The parking lot payment terminal 20 transmits the generated first identification information MID value to the mobile terminal $10_1$ (step S404). In the drawing, the first identification information MID value is denoted as MID#1.

When having received the first identification information MID transmitted from the parking lot payment terminal 20, the mobile terminal $10_1$ stores the received first identification information MID value as identification information for identifying itself (step S405). The mobile terminal $10_1$ may store the first identification information MID value in the RAM 1002 or the storage apparatus 1005. The storage is not limited thereto, and the mobile terminal $10_1$ may store the received first identification information MID value in a register included in the CPU 1000.

The parking lot payment terminal 20 and the mobile terminal $10_1$ exchange the UWB setting parameters using the BLE communication path (step S406). When having completed the exchange of the UWB setting parameters in step S406, the parking lot payment terminal 20 and the mobile terminal $10_1$ start the UWB devices in steps S407a and S407b, respectively.

When each UWB device is started, the parking lot payment terminal 20 performs UWB communication with the mobile terminal $10_1$ and starts UWB ranging (step S408). UWB ranging by the UWB device of the parking lot payment terminal 20 is performed onto the mobile terminal $10_1$ (step S409). When the UWB ranging is started and the UWB ranging is executed, the parking lot payment terminal 20 transmits an opcode LL_TERMINATE_IND to the mobile terminal $10_1$ and disconnects the BLE connection with the mobile terminal $10_1$ (step S410).

After disconnecting the BLE connection in step S410, the mobile terminal $10_1$ starts scanning the second packet ADV_IND in which the UUID value includes the first identification information MID value assigned to the mobile terminal itself (step S411). The second packet ADV_IND includes a second UUID value to be described below as the UUID value.

The parking lot payment terminal 20 transmits the first packet ADV_IND including the first UUID value again for searching for another mobile terminal $10_2$ (steps S412a and S412b).

In response to the packet ADV_IND, the mobile terminal $10_2$ returns a packet CONNECT_IND to the parking lot payment terminal 20 (step S413). The parking lot payment terminal 20 makes a BLE connection with the mobile terminal $10_2$ that has responded to the packet ADV_IND.

When having completed the BLE connection with the mobile terminal $10_2$, the parking lot payment terminal 20 generates a second identification information MID value, which is identification information for specifying the mobile terminal $10_2$. For example, the parking lot payment terminal 20 may generate the second identification information MID value using a 4-byte value of a random number. The parking lot payment terminal 20 transmits the generated second identification information MID value to the mobile terminal $10_2$ (step S415). In the drawing, the second identification information MID value is denoted as MID#2.

When having received the second identification information MID transmitted from the parking lot payment terminal 20, the mobile terminal $10_2$ stores the received second identification information MID value as identification information for identifying itself, similarly to step S405.

The parking lot payment terminal 20 and the mobile terminal $10_2$ exchange the UWB setting parameters using the BLE communication path (step S417). When having completed the exchange of the UWB setting parameters in step S417, the mobile terminal $10_2$ starts the UWB device in step S418.

When each UWB device is started, the parking lot payment terminal 20 performs UWB communication with the mobile terminal $10_2$ and starts UWB ranging (step S419). UWB ranging by the UWB device of the parking lot payment terminal 20 is performed onto the mobile terminal $10_2$ (step S420). When the UWB ranging is started and the UWB ranging is executed, the parking lot payment terminal 20 transmits an opcode LL_TERMINATE_IND to the mobile terminal $10_2$ and disconnects the BLE connection with the mobile terminal $10_2$ (step S421).

After disconnecting the BLE connection in step S421, the mobile terminal $10_2$ starts scanning the second packet ADV_IND in which the UUID value includes the first identification information MID value assigned to the mobile terminal itself (step S422). The second packet ADV_IND includes a second UUID value to be described below as the UUID value.

The parking lot payment terminal 20 transmits the first packet ADV_IND including the first UUID value again for searching for another mobile terminal $10_2$ (steps S423a and S423b). Since the mobile terminal $10_2$ is scanning the second packet ADV_IND, this first packet ADV_IND is not detected by the mobile terminal $10_2$.

Here, it is assumed that the parking lot payment terminal 20 has detected the mobile terminals $10_1$ and $10_2$ in the parking lot fee payment zone 50 by the UWB ranging started in step S408 (step S424). When having detected the mobile terminals 10 in the parking lot fee payment zone 50, the parking lot payment terminal 20 stops the transmission of the first packet ADV_IND and transmits the second packet ADV_IND (steps S425a and S425b).

At this time, the parking lot payment terminal 20 generates the second UUID value including the first identification information MID value generated in step S403 and the second identification information MID value generated in step S414. The parking lot payment terminal 20 stores and transmits the second UUID value including the first identification information MID value and the second identification information MID value in the second packet ADV_IND.

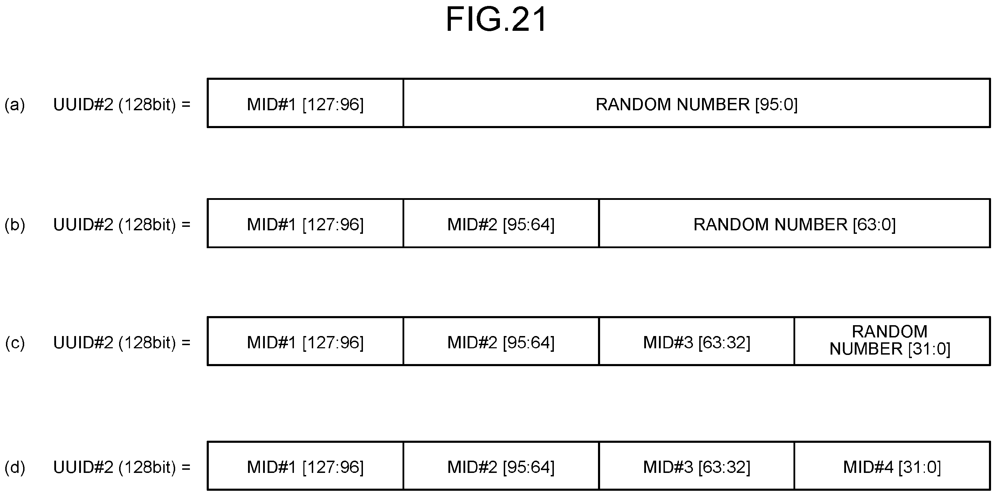

FIG. 21 is a schematic diagram illustrating an example of a configuration of a second UUID value according to the embodiment. In the embodiment, a UUID value having a 128 bit data length is divided into four blocks each having a 32 bit data length. The parking lot payment terminal 20 stores the identification information MID value in each block in accordance with the number of mobile terminals 10 detected in the parking lot fee payment zone 50. Sections (a) to (d) in FIG. 21 respectively illustrate examples in which the second UUID value stores: one identification information MID value (MID#1); two identification information MID values (MID#1 and MID#2); three identification information MID values (MID#1 to MID#3); and four identification information MID values (MID#1 to MID#4). The block of the second UUID value not storing the identification information MID value may store a random number, for example. At this time, control is performed so as not to include LOST_MID value = 0xFFFFFFFF in the value of each block.

The second UUID value includes: the first identification information MID value stored in the mobile terminal $10_1$; and the second identification information MID value stored in the mobile terminal $10_2$. Accordingly, the second packet ADV_IND including the second UUID value is received and recognized by the mobile terminals $10_1$ and $10_2$, individually (step S426a, step S426b).

Here, one of the plurality of mobile terminals 10 (mobile terminals $10_1$ and $10_2$ in this example) that have received the second packet ADV_IND needs to be selected as the mobile terminal 10 to have a BLE connection with the parking lot payment terminal 20. In the embodiment, the plurality of mobile terminals 10 that have received the second packet ADV_IND display an inquiry dialog screen for confirming connection permission to the parking lot payment terminal 20.

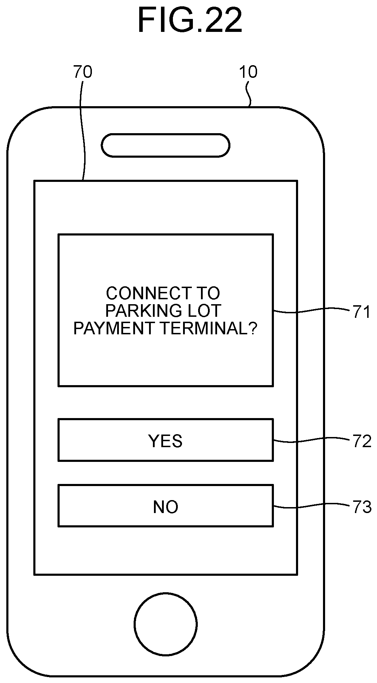

FIG. 22 is a schematic diagram illustrating an example of a dialogue screen for connection permission confirmation applicable to the embodiment. A dialogue screen 70 is displayed on the display device 1014 of the mobile terminal 10. In the illustrated example, the dialogue screen 70 includes a message display region 71 and buttons 72 and 73. The message display region 71 displays, for example, a message prompting the user to confirm the connection permission to the parking lot payment terminal 20. The button 72 is a button for notifying permission of connection while the button 73 is a button for notifying non-permission of connection.

The description returns to FIG. 20, and it is assumed that the button 72 is operated and connection permission is confirmed on the mobile terminal $10_1$, for example (step S427). In response to the operation on the button 72, the mobile terminal $10_1$ transmits the packet CONNECT_IND to the parking lot payment terminal 20 (step S428). This establishes BLE reconnection between the parking lot payment terminal 20 and the mobile terminal $10_1$.

Note that, in a case where the packet CONNECT_IND is transmitted from each of the plurality of mobile terminals 10 in response to the operation of the button 72, the parking lot payment terminal 20 may enable only the packet CONNECT_IND received earliest.

The parking lot payment terminal 20 connected to the mobile terminal $10_1$ transmits a packet ADV_NONCONN_IND to notify the mobile terminal $10_2$ being a non-connection target, that another mobile terminal is already connected (step S429). The packet ADV_NONCONN_IND stores, as the UUID value, a UUID#2' value, being a value including a LOST_MID value (0xFFFFFFFF) and a second identification information MID value for identifying the mobile terminal $10_2$.

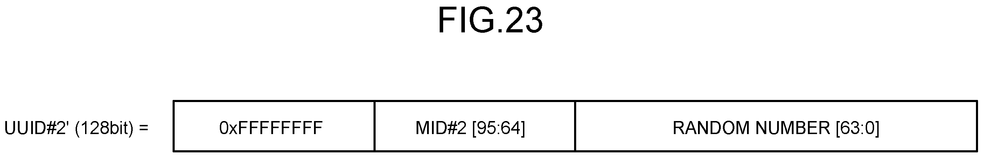

FIG. 23 is a schematic diagram illustrating a configuration of an example of packet ADV_NONCONN_IND applicable to the embodiment. As illustrated in FIG. 23, a block storing a 32-bit LOST_MID value "0xFFFFFFFF" is disposed at the head, followed by a 32-bit second identification information MID value (MID#2). The remaining 64-bit block included in the UUID value stores a random number, for example.

When having received the packet ADV_NONCONN_IND including the LOST_MID value "0xFFFFFFFF" and the second identification information MID value for identifying the mobile terminal $10_2$, the mobile terminal stops scanning the second packet ADV_IND (step S430).

After BLE reconnection, payment communication is performed between the parking lot payment terminal 20 and the mobile terminal $10_1$ using the reconnected BLE communication (step S431). When the payment communication in step S431 makes a normal termination, the UWB and BLE connections between the parking lot payment terminal 20 and the mobile terminal $10_1/10_2$ are disconnected (steps S432a and S432b).

In this manner, with the parking lot fee payment system 1 according to the embodiment, even with the presence of a plurality of mobile terminals 10 around the parking lot payment terminal 20, cashless payment can be made while an occupant of the vehicle 40 stays in the vehicle.

(3-2-4. Terminal determination in vehicle)

Next, terminal determination in the vehicle 40 according to the embodiment of the present disclosure will be described. That is, the following will describe processing, in the parking lot fee payment system 1 according to the embodiment, corresponding to the limitation of the number of UWB devices to be subjected to UWB ranging, which is the second problem described above.

In the embodiment, limitation of the number of UWB devices subject to UWB ranging is achieved using a mechanism by which only the mobile terminal 10 in the vehicle 40 responds to the first and/or second packet ADV_IND while the pedestrian's mobile terminal 10 does not respond to the first and/or second packet ADV_IND. In other words, in the embodiment, the mobile terminal 10 is equipped with a mechanism capable of determining whether the terminal itself is located in the vehicle 40, and the mobile terminal 10 outside the vehicle 40 is not allowed to respond to the first and/or second packets ADV_IND transmitted from the parking lot payment terminal 20.

In the following description, the first packet ADV_IND, out of the first packet ADV_IND and the second packet ADV_IND described above, will be defined as a target.

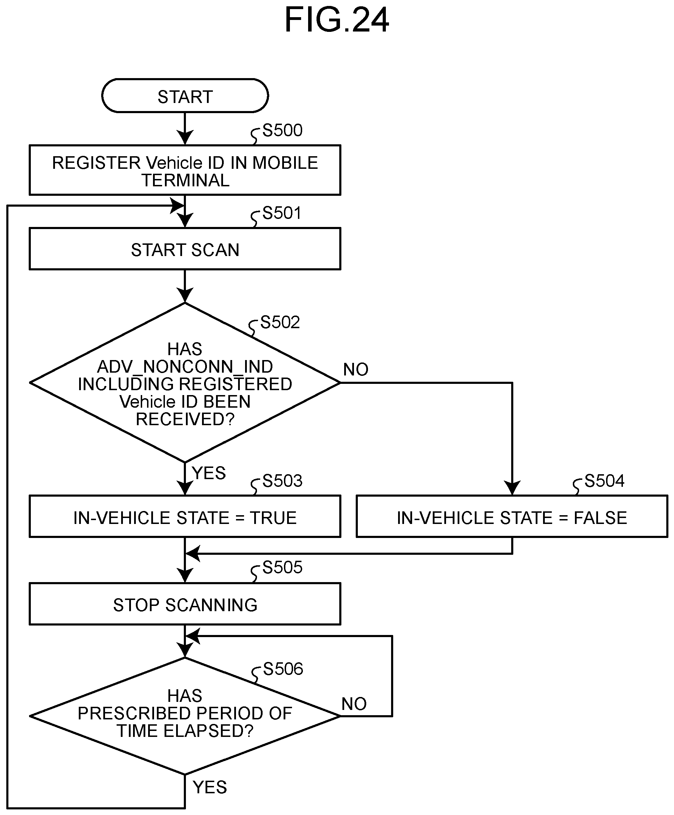

FIG. 24 is a flowchart illustrating an example of processing for determining whether the mobile terminal 10 is located in the vehicle 40 according to the embodiment.

In step S500, identification information Vehicle ID for identifying the vehicle 40 is registered in the mobile terminal 10. For example, the mobile terminal 10 uses the storage unit 105 to store the identification information Vehicle ID input by the user operation in a storage medium such as a register included in the RAM 1002, the storage apparatus 1005, or the CPU 1000.

The registration of the identification information Vehicle ID in the mobile terminal 10 may be performed at the time of purchase of the vehicle 40 or may be performed every boarding on the vehicle 40. When the vehicle 40 is a rental car or the like, the identification information Vehicle ID may be registered at the start of use of the vehicle 40.

Note that, for example, a Bluetooth beacon device is installed in the vehicle 40, and the beacon device includes a message indicating that the device is located in the vehicle 40 in the packet ADV_NONCONN_IND and periodically transmits the packet including the message.

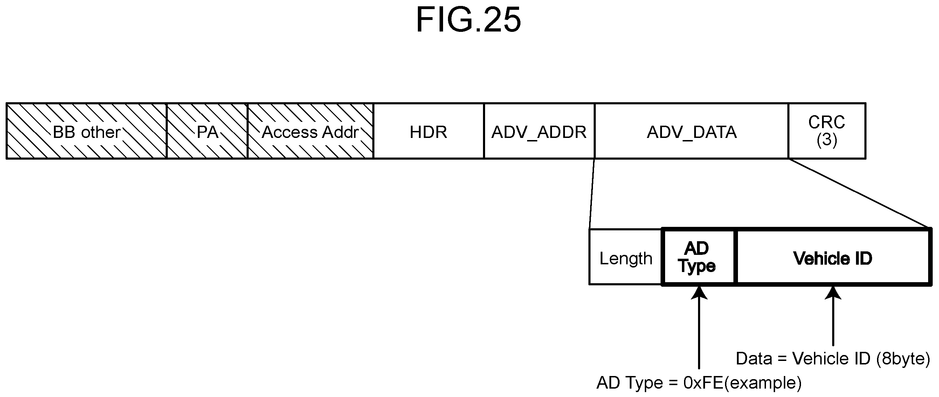

FIG. 25 is a schematic diagram illustrating a configuration of an example of packet ADV_NONCONN_IND applicable to the embodiment. The field ADV_DATA stores data AD Type and identification information Vehicle ID. The data AD Type is information indicating a type of subsequent data. This example indicates that the value of the data AD Type is "0xFE" and the subsequent data is identification information Vehicle. In addition, the identification information Vehicle has a data length of 8 bytes, for example.

In step S501, the mobile terminal 10 starts scanning a signal transmitted from the beacon device.

The mobile terminal 10 periodically scans the signal transmitted from the beacon device, and determines whether the packet ADV_NONCONN_IND including the identification information Vehicle ID has been received (step S502).

When having determined that the packet ADV_NONCONN_IND has been received (step S502, "Yes"), the mobile terminal 10 proceeds to the processing of step S503 and sets the value of the in-vehicle state to a value (defined as "TRUE") indicating that the mobile terminal 10 is located in the vehicle 40. In contrast, when having determined that the packet ADV_NONCONN_IND has not been received (step S502, "No"), the mobile terminal 10 proceeds to the processing of step S504 and sets the value of the in-vehicle state to a value (defined as "FALSE") indicating that the mobile terminal 10 is not located in the vehicle 40.

The value of the in-vehicle state is stored in a storage medium such as a register included in the RAM 1002, the storage apparatus 1005, or the CPU 1000 by the storage unit 105, for example.

After the processing of step S503 or step S504, the processing proceeds to step S505. In step S505, the mobile terminal 10 stops scanning the signal transmitted from the beacon device. In the next step S506, the mobile terminal 10 determines whether a prescribed period of time (for example, a predetermined time of 1 minute or less) has elapsed. When having determined that the prescribed period of time has not elapsed (step S506, "No"), the mobile terminal 10 returns to the processing of step S506.

In contrast, when having determined that the prescribed period of time has elapsed (step S506, "Yes"), the mobile terminal 10 returns to the processing of step S501 and restarts signal scanning.

With such processing, the mobile terminal 10 holds the value "TRUE" of the in-vehicle state in a case where the mobile terminal is located in the vehicle 40, and holds the value "FALSE" of the in-vehicle state in a case where the mobile terminal is not located in the vehicle 40.

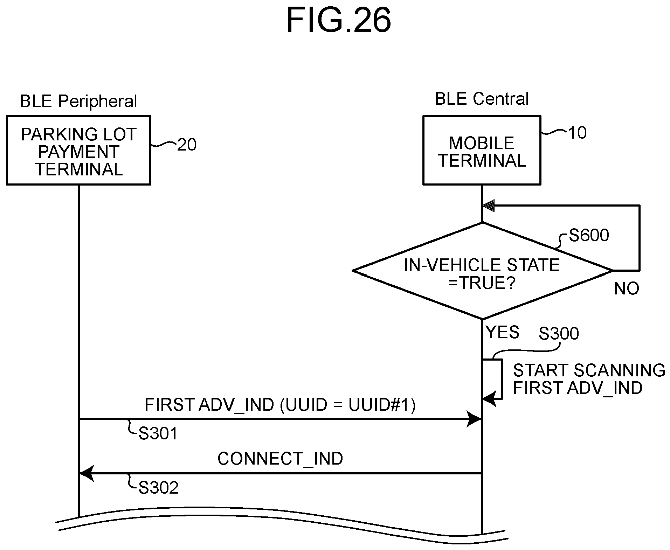

FIG. 26 is a flowchart of an example illustrating control of the mobile terminal 10 based on an in-vehicle state according to the embodiment. Note that FIG. 26 is an example in which control based on the in-vehicle state is incorporated in the processing described with reference to FIG. 19.

In FIG. 26, the mobile terminal 10 determines, in step S600, whether the value of the in-vehicle state stored by the terminal itself is the value "TRUE". When having determined that the value of the in-vehicle state is not the value "TRUE " (in this example," FALSE") (step S600, "No"), the mobile terminal 10 returns to the processing of step S600. In contrast, when having determined that the value of the in-vehicle state is the value "TRUE" (step S600, "Yes"), the mobile terminal 10 proceeds to the processing of step S300 and starts scanning of the first packet ADV_IND.

In this manner, when the value of the in-vehicle state is the value "TRUE", the mobile terminal 10 according to the embodiment executes the connection processing with the parking lot payment terminal 20 using BLE and UWB. On the other hand, in a case where the value is not the value "TRUE", that is, the value is the value "FALSE", the mobile terminal 10 does not execute the connection processing with the parking lot payment terminal 20 by BLE and UWB. Therefore, in the embodiment, it is possible to limit the number of UWB devices to be subjected to UWB ranging.

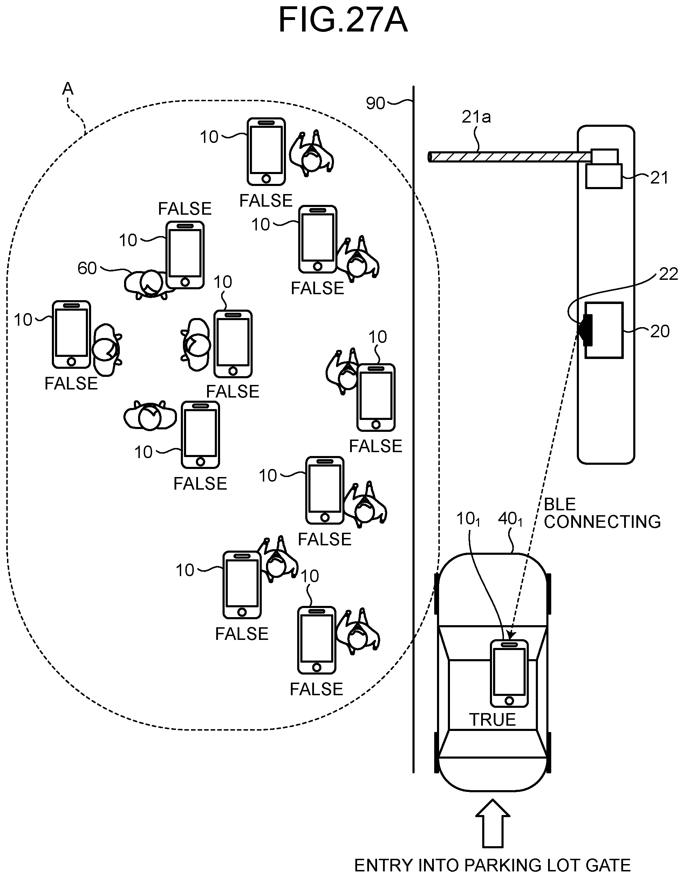

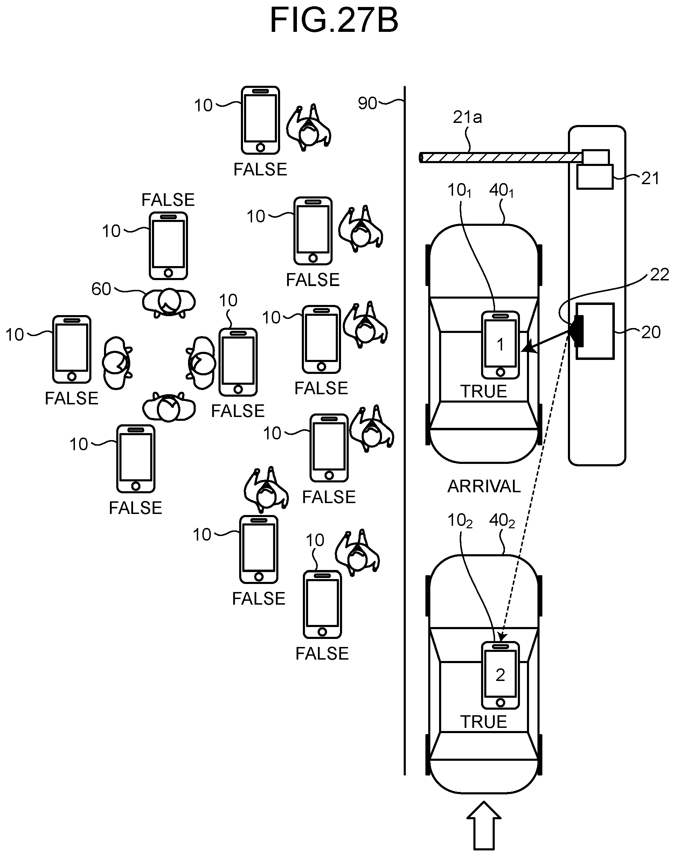

FIGS. 27A and 27B are schematic diagrams for illustrating that the number of UWB devices to be subjected to UWB ranging is limited by the processing according to the embodiment.

In FIG. 27 A, the value of the in-vehicle state of each mobile terminal 10 held by each pedestrian 60 on the left side of the boundary line 90 is the value "FALSE". Therefore, each mobile terminal 10 does not perform connection with the parking lot payment terminal 20 by BLE and UWB, according to the flowchart of FIG. 26. In other words, for the parking lot payment terminal 20, this is synonymous with the absence of the mobile terminal 10 of each pedestrian 60.

On the other hand, the mobile terminal $10_1$ located in the vehicle $40_1$ has a value "TRUE" as the value of the in-vehicle state, and thus is connectable to the parking lot payment terminal 20 by BLE and UWB according to the flowchart in FIG. 26.

In this manner, the parking lot fee payment system 1 according to the embodiment, determines whether the mobile terminal 10 is located in the vehicle 40, and excludes the mobile terminal 10 not located in the vehicle 40 from the BLE and UWB connection target with the parking lot payment terminal 20. This makes it possible to limit the number of UWB devices to be subjected to UWB ranging.

Furthermore, as illustrated in FIG. 27B, even in a case where the next vehicle $40_2$ including the mobile terminal $10_2$ enters the parking lot fee payment zone 50 when the vehicle $40_1$ arrives immediately in front of the parking lot payment terminal 20, the BLE and UWB connection processing can be executed between the parking lot payment terminal 20 and the mobile terminal $10_2$.

Note that the method of determining whether the mobile terminal 10 is located in the vehicle 40 is not limited to the method using the signal transmitted from the beacon device described above. For example, it is allowable to determine that the mobile terminal 10 is located in the vehicle 40 when the moving speed of the mobile terminal 10 exceeds 30 km/h, for example, or when a unique acceleration in the vehicle 40 is detected based on information of an acceleration sensor mounted on the mobile terminal 10, for example. In addition, whether the mobile terminal 10 is located in the vehicle 40 may be determined based on moving speed information of a self position using a Global Navigation Satellite System (GNSS) function mounted on the mobile terminal 10.

Furthermore, in a case where the mobile terminal 10 is used as a digital key of the vehicle 40, a value of the in-vehicle state may be determined and acquired by using an unlocking operation/locking operation of a door of the vehicle 40 as a trigger.

(3-3. Architecture applicable to embodiment)

Next, an architecture of the mobile terminal 10 applicable to the embodiment will be described.

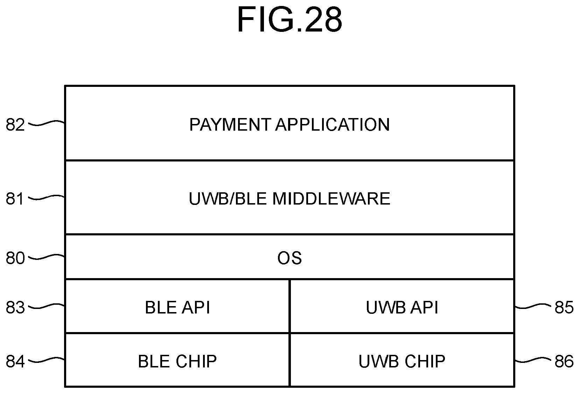

FIG. 28 is a schematic diagram for illustrating an architecture of the mobile terminal 10 according to the embodiment. Note that, FIG. 28 illustrates only portions highly related to the embodiment.

UWB/BLE middleware 81 for implementing the functions based on UWB and BLE operates on the OS 80, and a payment application 82 for executing the payment processing according to the embodiment is executed on the UWB/BLE middleware 81.

The OS 80 controls the operation of the BLE chip 84 that implements the function of BLE as hardware via a BLE application programming interface (BLE API) 83, and acquires information from the BLE chip 84. Furthermore, the OS 80 controls the operation of a UWB chip 86 that implements the UWB function as hardware via the UWB API85, and acquires information from the UWB chip 86.

In the configuration of FIG. 8, functions of the display unit 101, the input unit 102, the storage unit 105, and a part of the functions of the mobile terminal control unit 100 may be included in the OS 80. The BLE communication unit 103 may be included in the BLE API 83 and a part of the UWB/BLE middleware 81. Similarly, the UWB communication unit 104 may be included in the UWB API 85 and a part of the UWB/BLE middleware 81. Furthermore, the mobile terminal control unit 100 may include the function of the payment application 82.

In such a configuration, the processing on the mobile terminal 10 side in the sequences illustrated in FIGS. 19 and 20 may be controlled by the UWB/BLE middleware 81. For example, the UWB/BLE middleware 81 may invoke the BLE API83 via the OS 80 in response to an instruction from the payment application 82 to start scanning of the first packet ADV_IND, further invoke the UWB API85 as necessary, and execute subsequent communication processing with the parking lot payment terminal 20. The payment application 82 may be set as a resident program or may be started by the user as necessary.

As described above, according to the embodiment of the present disclosure, it is possible to realize, by using UWB and BLE, the parking lot fee payment system 1 capable of providing a convenient contactless UX, which does not require opening of a window or holding operation of the device at the time of payment of a parking lot fee.

(4. Other embodiments)

The scope of the technology according to the present disclosure is not limited to the application to the parking lot fee payment system 1. For example, the technology according to the present disclosure is applicable not only to the parking lot payment terminal 20 but also to an application in which a plurality of devices in a fee payment zone is detected and selected in other payment systems to make a payment.

In addition, the value of the in-vehicle state for identifying the mobile terminal 10 inside and outside the vehicle 40 is not limited to the vehicle 40, and is also applicable to identification of other facilities, inside and outside the area, and the like.

The effects described in the present specification are merely examples, and thus, there may be other effects, not limited to the exemplified effects.

Note that the present technology can also have the following configurations.

(1) A communication system comprising:

a fixed terminal including
a first communication unit configured to perform wireless communication in a first communication method, and
a first control unit configured to control the communication performed by the first communication unit; and
a mobile terminal including
a second communication unit configured to perform wireless communication in the first communication method,
a second control unit configured to control the communication performed by the second communication unit, and
a storage unit, wherein
the first control unit:

generates identification information unique to the mobile terminal connected by the communication performed by the first communication unit and transmits the generated identification information to the mobile terminal;
disconnects the connection with the mobile terminal after transmitting the identification information; and
designates the mobile terminal by using the identification information in the communication performed by the first communication unit, and reconnects to the mobile terminal, and
the second control unit:

stores, in the storage unit, the identification information acquired through the communication with the fixed terminal performed by the second communication unit; and
after the communication with the fixed terminal is disconnected by the fixed terminal, reconnects with the fixed terminal by the second communication unit in response to reception of identification information matching the identification information stored in the storage unit.

(2) The communication system according to the above (1), wherein

the fixed terminal further includes a third communication unit configured to perform, under control of the first control unit, communication in a second communication method capable of performing distance measurement to a communication partner,
the mobile terminal further includes a fourth communication unit configured to perform communication in the second communication method under control of the second control unit, and
the fixed terminal uses the third communication unit to perform communication with the fourth communication unit to perform the distance measurement regarding a distance between the fixed terminal and the mobile terminal, and reconnects to the mobile terminal detected within a predetermined distance range from the fixed terminal as a result of the distance measurement.

(3) The communication system according to the above (1) or (2), wherein

the fixed terminal further includes a payment communication unit configured to communicate with a payment apparatus configured to perform payment processing, and
the first control unit transmits and receives information for performing the payment processing by the payment apparatus to and from the mobile terminal using communication with the reconnected mobile terminal performed by the first communication unit.

(4) A fixed terminal comprising:

a first communication unit configured to perform wireless communication in a first communication method; and
a control unit configured to control the communication performed by the first communication unit, wherein
the control unit:

generates identification information unique to a mobile terminal connected by the communication performed by the first communication unit and transmits the generated identification information to the mobile terminal;
disconnects the connection with the mobile terminal after transmitting the identification information; and
designates the mobile terminal by using the identification information in the communication performed by the first communication unit, and reconnects to the mobile terminal.

(5) The fixed terminal according to the above (4), further comprising

a second communication unit configured to perform, under control of the control unit, communication in a second communication method capable of performing distance measurement to a communication partner, wherein
the control unit reconnects to the mobile terminal detected within a predetermined distance range as a result of the distance measurement performed by the second communication unit.

(6) The fixed terminal according to the above (5), wherein
the first communication method is Bluetooth Low Energy (BLE) and the second communication method is an Ultra-Wide Band wireless system.
(7) The fixed terminal according to the above (5) or (6), wherein

the control unit starts distance measurement to the mobile terminal by the second communication unit in response to the transmission of the identification information by the first communication unit, and disconnects the communication to the mobile terminal performed by the first communication unit.

(8) The fixed terminal according to any one of the above (5) to (7), wherein

the control unit transmits and receives information for payment to and from the reconnected mobile terminal, by communication using the first communication unit, and when the payment is completed, disconnects the communication performed by the first communication unit and the communication for distance measurement performed by the second communication unit.

(9) The fixed terminal according to any one of the above (4) to (8), wherein
the control unit:

connects to the mobile terminal by using a first identifier by the first communication unit;
performs connection processing again by the first communication unit by using the first identifier after the disconnection from the mobile terminal; and

reconnects to the mobile terminal by using a second identifier including one or more pieces of the identification information.

(10) The fixed terminal according to the above (9), wherein

the control unit,
when communication using the second identifier with another mobile terminal is enabled in accordance with the communication made by the reconnection, communicates with a terminal to which a connection notification has been transmitted among the mobile terminal and the another mobile terminal, and transmits a connection non-permission notification to a terminal to which the connection notification has not been transmitted.

(11) The fixed terminal according to any one of the above (4) to (10), wherein

the control unit
performs the connection using communication of the first communication unit, the connection made for the mobile terminal in a vehicle, as a target.

(12) The fixed terminal according to any one of the above (4) to (11), further comprising

a payment communication unit configured to communicate with a payment apparatus configured to perform payment processing, wherein
the control unit
transmits and receives information for performing the payment processing by the payment apparatus to and from the mobile terminal using communication with the reconnected mobile terminal performed by the first communication unit.

(13) A mobile terminal comprising:

a first communication unit configured to perform wireless communication in a first communication method;
a control unit configured to control the communication performed by the first communication unit; and
a storage unit, wherein
the control unit:

stores, in the storage unit, identification information acquired through communication with a fixed terminal performed by the first communication unit; and
after the communication is disconnected, reconnects with the fixed terminal by the first communication unit in response to reception of identification information matching the identification information stored in the storage unit.

(14) The mobile terminal according to the above (13), wherein

the control unit
determines whether the mobile terminal is located in a vehicle, and when having determined that the mobile terminal is not located in the vehicle, does not perform the communication using the first communication unit.

(15) The mobile terminal according to the above (13) or (14), further comprising

a second communication unit configured to perform, under control of the control unit, communication in a second communication method capable of performing distance measurement to a communication partner, wherein
the control unit
after having received the identification information stored in the storage unit, exchanges a parameter for communication performed by the second communication method with the fixed terminal through communication performed by the first communication unit, and starts communication performed by the second communication unit.

(16) The mobile terminal according to the above (15), wherein
the first communication method is Bluetooth Low Energy (BLE) (registered trademark) and the second communication method is an Ultra-Wide Band wireless system.
(17) The mobile terminal according to any one of the above (14) to (16), wherein
the communication using the first communication unit is disconnected by the fixed terminal after the communication using the second communication unit is started.
(18) The mobile terminal according to any one of the above (13) to (17), wherein
the control unit:

connects to the fixed terminal in accordance with a first identifier by the first communication unit; and
after the disconnection of the communication with the fixed terminal, and in a case where any of one or more pieces of identification information included in a second identifier transmitted from the fixed terminal matches the identification information stored in the storage unit, reconnects to the fixed terminal.

(19) The mobile terminal according to the above (18), wherein

the control unit,
in a case where the second identifier transmitted from the fixed terminal includes a plurality of pieces of identification information including identification information matching the identification information stored in the storage unit, presents a setting screen for setting in accordance with user operation whether to permit communication using the first communication unit with the fixed terminal.

(20) The mobile terminal according to the above (19), wherein
the control unit:

in a case where permission for communication performed by the first communication unit has been set on the setting screen, transmits a notification indicating communication permission to the fixed terminal; and
in a case where the permission of the communication has not been set, stops the communication performed by the first communication unit with the fixed terminal in response to a connection non-permission notification transmitted from the fixed terminal.

(21) The mobile terminal according to any of the above (13) to (20), in which

the control unit
uses the reconnected communication with the fixed terminal of the first communication unit to transmit and receive information for the fixed terminal to perform payment processing by the payment apparatus to and from the fixed terminal.

Reference Signs List

1 PARKING LOT FEE PAYMENT SYSTEM
10, $10_1$, $10_2$, $10_3$ MOBILE TERMINAL
20, 20a PARKING LOT PAYMENT TERMINAL
21 GATE BARRIER
21a GATE BAR
22 MOBILE COMMUNICATION UNIT
40, $40_1$, $40_2$, $40_3$, 40L VEHICLE

50 PARKING LOT FEE PAYMENT ZONE
51 BLE COMMUNICATION RANGE
60 PEDESTRIAN
70 DIALOG SCREEN
80 OS
81 UWB/BLE MIDDLEWARE
82 PAYMENT APPLICATION
83 BLE API
84 BLE CHIP
85 UWB API
86 UWB CHIP
100 MOBILE TERMINAL CONTROL UNIT
103, 203 BLE COMMUNICATION UNIT
104 UWB COMMUNICATION UNIT
105 STORAGE UNIT
200 PAYMENT TERMINAL CONTROL UNIT

## Claims

1. A communication system comprising:

a fixed terminal including
a first communication unit configured to perform wireless communication in a first communication method, and
a first control unit configured to control the communication performed by the first communication unit; and
a mobile terminal including
a second communication unit configured to perform wireless communication in the first communication method,
a second control unit configured to control the communication performed by the second communication unit, and
a storage unit, wherein
the first control unit:

generates identification information unique to the mobile terminal connected by the communication performed by the first communication unit and transmits the generated identification information to the mobile terminal;
disconnects the connection with the mobile terminal after transmitting the identification information; and
designates the mobile terminal by using the identification information in the communication performed by the first communication unit, and reconnects to the mobile terminal, and
the second control unit:

stores, in the storage unit, the identification information acquired through the communication with the fixed terminal performed by the second communication unit; and
after the communication with the fixed terminal is disconnected by the fixed terminal, reconnects with the fixed terminal by the second communication unit in response to reception of identification information matching the identification information stored in the storage unit.

2. The communication system according to claim 1, wherein

the fixed terminal further includes
a third communication unit configured to perform, under control of the first control unit, communication in a second communication method capable of performing distance measurement to a communication partner,
the mobile terminal further includes
a fourth communication unit configured to perform communication in the second communication method under control of the second control unit, and
the fixed terminal
uses the third communication unit to perform communication with the fourth communication unit to perform the distance measurement regarding a distance between the fixed terminal and the mobile terminal, and reconnects to the mobile terminal detected within a predetermined distance range from the fixed terminal as a result of the distance measurement.

3. The communication system according to claim 1, wherein

the fixed terminal further includes
a payment communication unit configured to communicate with a payment apparatus configured to perform payment processing, and
the first control unit
transmits and receives information for performing the payment processing by the payment apparatus to and from the mobile terminal using communication with the reconnected mobile terminal performed by the first communication unit.

4. A fixed terminal comprising:

a first communication unit configured to perform wireless communication in a first communication method; and
a control unit configured to control the communication performed by the first communication unit, wherein

the control unit:

generates identification information unique to a mobile terminal connected by the communication performed by the first communication unit and transmits the generated identification information to the mobile terminal;
disconnects the connection with the mobile terminal after transmitting the identification information; and
designates the mobile terminal by using the identification information in the communication performed by the first communication unit, and reconnects to the mobile terminal.

5. The fixed terminal according to claim 4, further comprising

a second communication unit configured to perform, under control of the control unit, communication in a second communication method capable of performing distance measurement to a communication partner, wherein
the control unit
reconnects to the mobile terminal detected within a predetermined distance range as a result of the distance measurement performed by the second communication unit.

6. The fixed terminal according to claim 5, wherein
the first communication method is Bluetooth Low Energy (BLE) and the second communication method is an Ultra-Wide Band wireless system.

7. The fixed terminal according to claim 5, wherein

the control unit
starts distance measurement to the mobile terminal by the second communication unit in response to the transmission of the identification information by the first communication unit, and disconnects the communication to the mobile terminal performed by the first communication unit.

8. The fixed terminal according to claim 5, wherein

the control unit
transmits and receives information for payment to and from the reconnected mobile terminal, by communication using the first communication unit, and when the payment is completed, disconnects the communication performed by the first communication unit and the communication for distance measurement performed by the second communication unit.

**9.** The fixed terminal according to claim 4, wherein the control unit:

connects to the mobile terminal by using a first identifier by the first communication unit;
performs connection processing again by the first communication unit by using the first identifier after the disconnection from the mobile terminal; and
reconnects to the mobile terminal by using a second identifier including one or more pieces of the identification information.

**10.** The fixed terminal according to claim 9, wherein

the control unit,
when communication using the second identifier with another mobile terminal is enabled in accordance with the communication made by the reconnection, communicates with a terminal to which a connection notification has been transmitted among the mobile terminal and the another mobile terminal, and transmits a connection non-permission notification to a terminal to which the connection notification has not been transmitted.

**11.** The fixed terminal according to claim 4, wherein

the control unit
performs the connection using communication of the first communication unit, the connection made for the mobile terminal in a vehicle, as a target.

**12.** The fixed terminal according to claim 4, further comprising

a payment communication unit configured to communicate with a payment apparatus configured to perform payment processing, wherein
the control unit
transmits and receives information for performing the payment processing by the payment apparatus to and from the mobile terminal using communication with the reconnected mobile terminal performed by the first communication unit.

**13.** A mobile terminal comprising:

a first communication unit configured to perform wireless communication in a first communication method;
a control unit configured to control the communication performed by the first communication unit; and
a storage unit, wherein

the control unit:

stores, in the storage unit, identification information acquired through communication with a fixed terminal performed by the first communication unit; and
after the communication is disconnected, reconnects with the fixed terminal by the first communication unit in response to reception of identification information matching the identification information stored in the storage unit.

**14.** The mobile terminal according to claim 13, wherein

the control unit
determines whether the mobile terminal is located in a vehicle, and when having determined that the mobile terminal is not located in the vehicle, does not perform the communication using the first communication unit.

**15.** The mobile terminal according to claim 13, further comprising

a second communication unit configured to perform, under control of the control unit, communication in a second communication method capable of performing distance measurement to a communication partner, wherein
the control unit
after having received the identification information stored in the storage unit, exchanges a parameter for communication performed by the second communication method with the fixed terminal through communication performed by the first communication unit, and starts communication performed by the second communication unit.

**16.** The mobile terminal according to claim 15, wherein
the first communication method is Bluetooth Low Energy (BLE) (registered trademark) and the second communication method is an Ultra-Wide Band wireless system.

**17.** The mobile terminal according to claim 15, wherein
the communication using the first communication unit is disconnected by the fixed terminal after the communication using the second communication unit is started.

**18.** The mobile terminal according to claim 13, wherein
the control unit:

connects to the fixed terminal in accordance with a first identifier by the first communication unit; and

after the disconnection of the communication with the fixed terminal, and in a case where any of one or more pieces of identification information included in a second identifier transmitted from the fixed terminal matches the identification information stored in the storage unit, reconnects to the fixed terminal.

19. The mobile terminal according to claim 18, wherein

the control unit,
in a case where the second identifier transmitted from the fixed terminal includes a plurality of pieces of identification information including identification information matching the identification information stored in the storage unit, presents a setting screen for setting in accordance with user operation whether to permit communication using the first communication unit with the fixed terminal.

20. The mobile terminal according to claim 19, wherein
the control unit:

in a case where permission for communication performed by the first communication unit has been set on the setting screen, transmits a notification indicating communication permission to the fixed terminal; and
in a case where the permission of the communication has not been set, stops the communication performed by the first communication unit with the fixed terminal in response to a connection non-permission notification transmitted from the fixed terminal.

# FIG.1

# FIG.2

# FIG.3

(a)

(b)

# FIG.4

# FIG.5

# FIG.6

$t_1$ (MEASUREMENT TIME)

t (TIME)

UWB
Initiator

Distance

UWB
frame

UWB
frame

Distance
=c(SPEED OF LIGHT)×$(t_1\text{-}t_2)$/2

ToF

Responder

t (TIME)

$t_2$
(PROCESSING TIME)

# FIG.7

10

| 1013 INPUT DEVICE | | 1014 DISPLAY DEVICE |

| 1000 CPU | 1001 ROM | 1002 RAM | 1003 INPUT CONTROL UNIT | 1004 DISPLAY CONTROL UNIT |

1020

| 1005 STORAGE APPARATUS | 1006 COMMUNICA-TION I/F | 1007 DATA I/F | 1008 BLE COMMUNICA-TION I/F | 1009 UWB COMMUNICA-TION I/F |

# FIG.8

**MOBILE TERMINAL** ⌐10

| | |
|---|---|
| ⌐103 **BLE COMMUNICATION UNIT** | ⌐100 **MOBILE TERMINAL CONTROL UNIT** |
| ⌐104 **UWB COMMUNICATION UNIT** | ⌐101 **DISPLAY UNIT** |
| ⌐105 **STORAGE UNIT** | ⌐102 **INPUT UNIT** |

# FIG.9

20

⌐2013 **INPUT DEVICE**  ⌐2014 **DISPLAY DEVICE**

⌐2000 **CPU** | ⌐2001 **ROM** | ⌐2002 **RAM** | ⌐2003 **INPUT CONTROL UNIT** | ⌐2004 **DISPLAY CONTROL UNIT**

⌐2020

⌐2005 **STORAGE APPARATUS** | ⌐2006 **COMMUNICA-TION I/F** | ⌐2007 **GATE COMMUNICA-TION I/F** | ⌐2008 **BLE COMMUNICA-TION I/F** | ⌐2009 **UWB COMMUNICA-TION I/F**

**MOBILE COMMUNICATION UNIT** ⌐22

# FIG.10

PARKING LOT PAYMENT TERMINAL — 20

| 203 BLE COMMUNICATION UNIT | 200 PAYMENT TERMINAL CONTROL UNIT |
| --- | --- |
| 204 UWB COMMUNICATION/ DISTANCE MEASUREMENT UNIT | 201 DISPLAY UNIT |
| 205 GATE COMMUNICATION UNIT | 202 INPUT UNIT |
| 206 PAYMENT COMMUNICATION UNIT | 208 STORAGE UNIT |
| 207 PAYMENT PROCESSING UNIT | |

# FIG.11

BLE Peripheral

20 — PARKING LOT PAYMENT TERMINAL

BLE Central

10 — MOBILE TERMINAL

ADV_IND
S100

CONNECT_IND
S101

BLE COMMUNICATION

S102

UWB SETTING PARAMETER EXCHANGE (BLE COMMUNICATION)

S103a

START UWB DEVICE

S103b

START UWB DEVICE

S104

RANGING (UWB COMMUNICATION)

UWB COMMUNICATION

RANGING (UWB COMMUNICATION)

DETECT MOBILE TERMINAL IN PARKING LOT FEE PAYMENT ZONE

S105

BLE COMMUNICATION

S106

PARKING LOT FEE PAYMENT COMMUNICATION (BLE COMMUNICATION)

DISCONNECT BLE & UWB
S107

FIG.12

(a) (BLE) Advertise / Device discovery

(b) BLE CONNECTION / UWB PARAMETER EXCHANGE

(c) (UWB)RANGING

PARKING LOT FEE PAYMENT PROCESSING

(d) (UWB) RANGING

(e)

EP 4 576 925 A1

# FIG.13

37

# FIG.14

EP 4 576 925 A1

# FIG.15

PDU Type =
0000b: ADV_IND
**0001b: ADV_DIRECT_IND**
0010b: ADV_NONCONN_IND

(a)

| Length (8bit) | RxAdd (1bit) | TxAdd (1bit) | ChSel (1bit) | RFU (1bit) | PDU Type (4bit) |
|---|---|---|---|---|---|

(b)

| BB layer other info | PA (1) | Access Addr (4) | HDR (2) | AdvA (6) | **TargetA (6)** | CRC (3) |
|---|---|---|---|---|---|---|

FIG.16

# FIG.17A

# FIG.17B

ARRIVAL

# FIG.18A

# FIG.18B

# FIG.19

BLE Peripheral

BLE Central

20 ~ PARKING LOT PAYMENT TERMINAL

10 ~ MOBILE TERMINAL

S300 — START SCANNING FIRST ADV_IND

S301 — FIRST ADV_IND (UUID = UUID#1)

S303 — CONNECT_IND — S302

GENERATE RANDOM NUMBER ID FOR MOBILE TERMINAL #1 = MID#1

MID#1 NOTIFICATION (e.g. 4-byte RANDOM NUMBER)

S304

S305 — STORE MID#1 VALUE

S307a

UWB SETTING PARAMETER EXCHANGE (BLE COMMUNICATION)

S306

S307b — START UWB DEVICE

START UWB DEVICE

S308

START UWB RANGING

UWB RANGING

LL_TERMINATE_IND (BLE DISCONNECTION)

S309

S310

S311 — START SCANNING OF SECOND ADV_IND

DETECT MOBILE TERMINAL #1 IN PARKING LOT FEE PAYMENT ZONE

S312

FIRST ADV_IND (UUID = UUID#1)

S314

UWB RANGING

SECOND ADV_IND (UUID = UUID#2)

S315

S313

CONNECT_IND

S316

PARKING LOT FEE PAYMENT COMMUNICATION (BLE COMMUNICATION)

S317

DISCONNECT BLE & UWB

S318

# FIG.20

# FIG.21

(a) UUID#2 (128bit) =

| MID#1 [127:96] | RANDOM NUMBER [95:0] |
|---|---|

(b) UUID#2 (128bit) =

| MID#1 [127:96] | MID#2 [95:64] | RANDOM NUMBER [63:0] |
|---|---|---|

(c) UUID#2 (128bit) =

| MID#1 [127:96] | MID#2 [95:64] | MID#3 [63:32] | RANDOM NUMBER [31:0] |
|---|---|---|---|

(d) UUID#2 (128bit) =

| MID#1 [127:96] | MID#2 [95:64] | MID#3 [63:32] | MID#4 [31:0] |
|---|---|---|---|

EP 4 576 925 A1

# FIG.22

# FIG.23

UUID#2' (128bit) =

| 0xFFFFFFFF | MID#2 [95:64] | RANDOM NUMBER [63:0] |
|------------|--------------|----------------------|

# FIG.24

```
                    ┌──────────────────────┐
                    │        START         │
                    └──────────┬───────────┘
                               │  ┌S500
                               ▼
              ┌────────────────────────────────────┐
              │  REGISTER Vehicle ID IN MOBILE      │
              │          TERMINAL                   │
              └────────────────┬───────────────────┘
                               │  ┌S501
                               ▼
              ┌────────────────────────────────────┐
              │           START SCAN               │
              └────────────────┬───────────────────┘
                               │
                               ▼  ┌S502
                          ╱──────────╲
                         ╱    HAS     ╲        NO
                        ╱ ADV_NONCONN_IND╲──────────┐
                        ╲INCLUDING REGISTERED       │
                         ╲Vehicle ID BEEN╱          │
                          ╲ RECEIVED? ╱             │
                           ╲────────╱               │
                               │ YES                │
                               │  ┌S503             │  ┌S504
                               ▼                    ▼
              ┌──────────────────────────┐  ┌──────────────────────────┐
              │ IN-VEHICLE STATE = TRUE  │  │ IN-VEHICLE STATE = FALSE │
              └────────────┬─────────────┘  └────────────┬─────────────┘
                           │◄────────────────────────────┘
                           │  ┌S505
                           ▼
              ┌──────────────────────────┐
              │      STOP SCANNING       │
              └────────────┬─────────────┘
                           │
                           ▼  ┌S506
                      ╱──────────╲          NO
                     ╱    HAS     ╲──────────┐
                    ╱ PRESCRIBED PERIOD OF   │
                    ╲ TIME ELAPSED? ╱        │
                     ╲────────────╱
                           │ YES
```

## FIG.25

| BB other | PA | Access Addr | HDR | ADV_ADDR | ADV_DATA | CRC (3) |
|---|---|---|---|---|---|---|

| Length | AD Type | Vehicle ID |
|---|---|---|

AD Type = 0xFE(example)

Data = Vehicle ID (8byte)

EP 4 576 925 A1

# FIG.26

# FIG.27A

ENTRY INTO PARKING LOT GATE

# FIG.27B

# FIG.28

| | |
|---|---|
| **PAYMENT APPLICATION** (82) | |
| **UWB/BLE MIDDLEWARE** (81) | |
| **OS** (80) | |
| **BLE API** (83) | **UWB API** (85) |
| **BLE CHIP** (84) | **UWB CHIP** (86) |

# EP 4 576 925 A1

<table>
<tr><td colspan="2">INTERNATIONAL SEARCH REPORT</td><td>International application No.<br><br>**PCT/JP2023/030035**</td></tr>
</table>

**A. CLASSIFICATION OF SUBJECT MATTER**

*H04W 76/19*(2018.01)i; *G07B 15/00*(2011.01)i; *H04W 4/00*(2018.01)i; *H04W 4/44*(2018.01)i; *H04W 76/30*(2018.01)i; *H04W 84/10*(2009.01)i

FI: H04W76/19; H04W76/30; H04W4/00 110; H04W84/10 110; H04W4/44; G07B15/00 M

According to International Patent Classification (IPC) or to both national classification and IPC

**B. FIELDS SEARCHED**

Minimum documentation searched (classification system followed by classification symbols)

H04B7/24-7/26, H04W4/00-99/00, G07B15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-160945 A (CASIO COMPUTER CO LTD) 11 October 2018 (2018-10-11)<br>paragraphs [0031]-[0032], [0118] | 1-20 |
| A | JP 2017-165014 A (KONICA MINOLTA INC) 21 September 2017 (2017-09-21)<br>paragraphs [0016]-[0020] | 1-20 |
| A | JP 2020-16120 A (NISSEICOM LTD) 30 January 2020 (2020-01-30)<br>paragraphs [0033]-[0046] | 1-20 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/030035**

| Patent document cited in search report | | | Publication date (day/month/year) | Patent family member(s) | Publication date (day/month/year) |
|---|---|---|---|---|---|
| JP | 2018-160945 | A | 11 October 2018 | (Family: none) | |
| JP | 2017-165014 | A | 21 September 2017 | (Family: none) | |
| JP | 2020-16120 | A | 30 January 2020 | (Family: none) | |

Form PCT/ISA/210 (patent family annex) (January 2015)

**REFERENCES CITED IN THE DESCRIPTION**

**Patent documents cited in the description**

- JP 2022079566 A